# EUROPEAN PATENT APPLICATION

(11) **EP 4 841 397 A1**
(43) Date of publication of application: **18.11.2026**
(21) Application number: 25199145.1
(22) Date of filing: 29.08.2025
(51) Int. Cl.: G06F 3/01, G06F 3/0346, G06F 16/903, G06F 40/56

(54) **NAVIGATION AND VIEW SHARING SYSTEM FOR REMOTE COLLABORATION**

(30) Priority: 14.05.2025 US 202563805787 P
(71) Applicant: Autodesk, Inc., San Francisco, CA 94105 (US)
(72) Inventor: SARGUNAM, Shyam Prathish, San Francisco, 94105 (US); MENON, Ajay Vijayabalan, San Francisco, 94105 (US); SANKINENI, Preethi, San Francisco, 94105 (US)
(74) Representative: Fish & Richardson P.C.

(57) **Abstract**

Methods, systems, and apparatus, including medium-encoded computer program products, for navigating and view sharing include: rendering, to a first device of a first user, a first user's view into an environment that is generated in accordance with a first position and a first orientation of an avatar associated with the first user, wherein the first user's view into the environment comprises a user interface element positioned at a second position in the environment to indicate that a spatial recording has been stored; receiving, by the first device of the first user, an interaction with the user interface element to request to view the spatial recording; and in response to receiving the request, providing a playback for presentation to the first user, wherein the playback is generated based on the spatial recording from a perspective of the first user in the environment at the first position and with the first orientation.

## Description

### BACKGROUND

This specification relates to spatial recording viewing and content searching within a rendered environment at a user interface. The specification relates to techniques that can be used in computer graphics applications, such as computer-generated animation and/or computer-aided design of physical structures and/or other visualization systems and techniques.

A computer-generated simulated environment can be configured to enable user to perform individual or collaborative tasks. The environment can be supported by different types of devices (e.g., goggles, joy sticks, sensor-based interaction supporting tools, pencils, touch pads, gloves, etc.) that can be used to provide interactive input and obtain output in different format (e.g., visual, textual, audio, combination thereof). Examples of computer-generated simulated environments include two-dimensional (2D) environments or three-dimensional (3D) environments. A 2D environment can be provided by a 2D interface, such as a desktop or tablet computer interface. A 3D environment can be provided by an 3D interface, such as a virtual reality (VR) interface, augmented reality (AR) interface, mixed reality (MR) interface, or another extended reality (XR) interface.

### SUMMARY

This specification relates to generating and viewing spatial recordings in a computer-generated simulated environment. Further, the specification relates to searching through the spatial recordings. The special recordings can be used in computer graphics applications, such as computer-generated animation, collaborative interior design, building and/or site design and/or construction management, computer-aided design of physical structures, and/or other visualization systems and techniques.

Embodiments of the subject matter of this application include computer implemented methods for viewing playbacks associated with generated spatial recordings, for searching at a database storing spatial recordings, as well as corresponding computer systems, apparatus, and computer programs recorded on one or more computer storage devices, each configured to perform the actions of the methods. A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

Particular embodiments of the subject matter described in this specification can be implemented to realize one or more of the following advantages. Some techniques described in this specification relate to generating and displaying spatial recordings to users based on their position within a virtual environment that can be a 2D or a 3D environment. A user can be allowed to switch viewpoints when viewing a playback generated based on the same spatial recording. For example, the user can switch between a third-person view mode viewing the playback from the current position of the user within the environment to a first-person view mode viewing the playback from a position of a user who recorded the spatial recording. Based on these techniques, the user can dynamically change the view of the environment as the user is repositioned in the environment without changing their physical position. Such techniques support improved accessibility of the provided content through the playback while also enabling the user to more quickly understand the content by obtaining view of the playback from different perspectives through efficient interaction with the environment. Moreover, in some instances, the viewing of the playback can be performed through a different version of the environment that can allow the user to select between one or more versions of the environment and then view the playback in context of the selected version, where the playback may be generated based on a spatial recording generated based on a different version of the environment compared to the one being viewed.

The searching techniques described in this specification facilitate an efficient and robust search through a very large number of spatial recordings generated for the environment to retrieve a smaller set of spatial recordings that are relevant to a user query. By leveraging embeddings generated by an embedding neural network and performing the search in an embedding space, these described techniques significantly increase efficiency in usage of computational resources when searching for spatial recordings that contain content of interest. Thus, for example, the spatial querying system described in this specification can significantly reduce the consumption of computing resources, e.g., memory allocation and processor cycle, compared to existing content-based search systems, because such existing content-based search systems would typically perform the search in a higher-dimensional space, e.g., the data space in which the spatial recordings reside, to attempt to identify spatial recordings that include all (or at least one or more) of the search terms in a user query.

The described spatial recording displaying and searching techniques also improve user experience. By utilizing the spatial querying services provided by the spatial querying system, users are able to more quickly find content included in relevant spatial recordings that corresponds to their requests for information, e.g., in order to gain more thorough insights into the environment or more quickly spot issues that exist in the environment, while working independently or in cooperation with other users within the same environments over one or more projects. When used in the context of collaborative work on graphics design tasks, e.g., interior design tasks, urban planning tasks, construction tasks, product manufacturing tasks, design tasks (e.g., designs of machines, buildings, constructions sites, plants, civil engineering projects, and so on), that involve interactions between multiple collaborative users viewing the same computer-generated simulated environment, the described techniques can thus improve the overall timeliness and efficiency of the process flow of these tasks, because each individual user can more likely be made aware of the context of prior discussions( as recorded) and any issues about the environment raised by other users.

The details of one or more embodiments of the subject matter described in this specification are set forth in the accompanying drawings and the description below. Other features, aspects, and advantages of the invention will become apparent from the description, the drawings, and the claims.

### BRIEF DESCRIPTION OF THE DRAWINGS

FIG. 1 shows an example of a system usable to provide a computer-generated simulated environment in accordance with the implementations of the present disclosure.
FIG. 2 is a schematic diagram of a graphics application, a spatial insights system, an artificial intelligence (AI) system, and a database in relation to each other.
FIG. 3A shows an example user interface provided for display to a user accessing an XR environment to generate a spatial recording in accordance with implementations of the present disclosure.
FIG. 3B shows another example user interface provided for display to a user accessing an XR environment to generate a spatial recording in accordance with implementations of the present disclosure.
FIG. 3C shows another example user interface provided for display to a user accessing an XR environment to generate a spatial recording in accordance with implementations of the present disclosure.
FIG. 3D shows another example user interface provided for display to a user accessing an XR environment to generate a spatial recording in accordance with implementations of the present disclosure.
FIG. 4 shows an example of a process to generate a spatial recording in accordance with implementations of the present disclosure.
FIG. 5A shows an example user interface provided for display to a user accessing an XR environment to present a playback in accordance with implementations of the present disclosure.
FIG. 5B shows another example user interface provided for display to a user accessing an XR environment to present a playback in accordance with implementations of the present disclosure.
FIG. 5C shows another example user interface provided for display to a user accessing an XR environment to present a playback in accordance with implementations of the present disclosure.
FIG. 5D shows another example user interface provided for display to a user accessing an XR environment to present a playback in accordance with implementations of the present disclosure.
FIG. 6 shows an example of a process to provide a playback that is generated based on the spatial recording for presentation in accordance with implementations of the present disclosure.
FIG. 7A shows another example user interface provided for display to a user accessing an XR environment to present a playback in a first-person view mode in accordance with implementations of the present disclosure.
FIG. 7B shows another example user interface provided for display to a user accessing an XR environment to present a content associated with a spatial recording in accordance with implementations of the present disclosure.
FIG. 8A shows an example of a hybrid environment in accordance with implementations of the present disclosure.
FIG. 8B shows an example user interface provided for display to a user accessing a hybrid environment to present a playback in accordance with implementations of the present disclosure.
FIG. 8C shows another example user interface provided for display to a user accessing a hybrid environment to present a playback in accordance with implementations of the present disclosure.
FIG. 9 shows an example of another process to provide a playback that is generated based on the spatial recording for presentation in accordance with implementations of the present disclosure.
FIG. 10A shows another example user interface provided for display to a user accessing an XR environment to present a playback in accordance with implementations of the present disclosure.
FIG. 10B shows another example user interface provided for display to a user accessing an XR environment to present a playback in accordance with implementations of the present disclosure.
FIG. 11 is a schematic diagram of a graphics application, a spatial query system, and a database in relation to each other.
FIG. 12 shows an example of a process to generate a response for a query in accordance with implementations of the present disclosure.
FIG. 13 is a schematic diagram of a data processing system including a data processing apparatus, which can be programmed as a client or as a server.

Like reference numbers and designations in the various drawings indicate like elements.

### DETAILED DESCRIPTION

This specification relates to generating spatial recordings in a computer-generated simulated environment and searching through the spatial recordings and/or other data generated based on the spatial recordings to render images, video, or text content, as well as spatial 3D content (e.g., avatars or pointers), into a virtual environment displayed on a device. In some instances, the rendering of such content can be performed in the context of collaborative work by multiple users in the computer-generated simulated environment, for example, over different versions of the environment, during different phases of defining a data model representing the environment, during an interactive activity (e.g., game) in the simulated environment, or other.

Examples of computer-generated simulated environments include two-dimensional (2D) environments that can be provided by a "2D interface", three-dimensional (3D) environments that can be provided by a "3D interface". In some examples, the computer-generated simulated environment can be an extended reality (XR) environments that can be provided by an "XR interface". The XR environment can be provided by an XR system or platform. Multiple interconnected environments can be provided as part of an XR environment. The different types of environments that can be part of an XR environment include a VR environment (that is a 3D environment that simulates an immersive feeling for the user of the rendered visual world), an augmented reality (AR) environment (that augments a viewed real-world environment by overlaying real-time 2D or 3D rendered graphical objects onto portions of the real-world through a display such as a handheld device or headset), a mixed reality (MR) environment (the allows real and virtual elements to interact in the 2D or 3D environment), a desktop environment, a web preview environment, a mobile native application environment, among other example environments that can be supported by different types of devices and corresponding interactive user input devices (e.g., goggles, joy sticks, sensor-based interaction supporting tools, pencils, touch pads, gloves, etc.) used by users who enter into the XR environment.

Examples of a 2D environment include 2D data files such as images and views/ projections of a 3D or XR environment from a particular viewpoint generated by a desktop computer interface or a tablet computer interface, and a 2D coordinate plane. The 2D coordinate plane can include a sequence of data organized along 2 axes, e.g., a first axis (e.g., an X-axis) and a second axis (e.g., a Y-axis), which can each represent either distance or time.

Examples of a 3D environment include a VR environment, an AR environment, a MR environment, an XR environment, a 3D model, and a geo map. The 3D model can for example be a 3D model of a product, e.g., a product to be manufactured by a manufacturing machine. The geo map, also known as a geographical map, is a visual representation of geographic data. The geo map can for example be a data model for visually displaying data points within a construction project, a building, or another geographic region.

A 2D interface can be implemented as software, or as a combination of hardware with software, to display 2D content and to support end user interaction with exposed 2D user interface elements that can be associated with executed implemented functions. In some instances, a 2D interface can be implemented as a 2D user interface (UI) application or a component of a software application that include user interface elements for display on hardware configured to present 2D content on 2D hardware. 2D hardware can be such as traditional desktop or tablet devices. 2D hardware can include a 2D display, e.g., a 2D monitor, and a 2D input device, e.g., a mouse and/or trackball.

A 3D interface can be implemented as software, or as a combination of hardware with software, to display 3D content and to support end user interaction with exposed 3D user interface elements that can be associated with executed implemented functions. In some instances, a 3D interface can be implemented as a 3D user interface (UI) application or a component of a software application that includes user interface elements for display on hardware configured to present 3D content on 3D hardware. For example, the 3D content can include a 3D scene, e.g., a particular view of the 3D environment depending on the position/location of the user viewpoint within the 3D environment, and the 3D hardware can include a 3D display. 3D hardware can be such as a VR device, an AR device, a MR device, or another XR device. 3D hardware can include a 3D display, e.g., a VR headset, an AR headset, a MR headset, or another XR headset, and a 3D input device, e.g., a 3D controller that operates in 3D, a 3D tracking device, or a camera.

An XR interface can be implemented as software, or as a combination of hardware with software, to display XR content and to support end user interaction with exposed XR user interface elements that can be associated with executed implemented functions. In some instances, an XR interface can be implemented as an XR user interface (UI) application or a component of a software application that include user interface elements for display on hardware configured to present XR content on appropriate 2D/3D hardware. For example, the XR content can include a particular view of the XR environment that includes various XR virtual objects.

An XR environment can be either a 2D environment, a 3D environment, or a hybrid environment that is an interconnected combination of both 2D and 3D environments (that can be displayed on 2D or 3D devices). In some instances, a hybrid environment can include a 2D environment presented on a tablet device and a 3D VR environment displayed through a headset worn by a user. While the embodiments discussed below in the specification mostly relate to 3D environments, the disclosed techniques-including the spatial recordings generation, displaying, and searching techniques-can also apply to 2D environments, and can further apply to any other hybrid environments that include different types of 2D and 3D environments.

Spatial recordings can be generated in the computer-generated simulated environment. Spatial recordings can include more information than a typical screen recording as they can capture interaction of a user with the computer-generated simulated environment including location, posture, gaze, and gestures of an avatar of the user. In some implementations, spatial recordings can be recordings captured from one or more of a VR environment, an AR environment, a MR environment, or another XR environment, where one or multiple users can interact in a 3D scene.

After being generated, the spatial recordings can be stored in a database and shared with other users viewing the computer-generated simulated environment at a later point. A spatial recording can be stored in relation to a location within the computer-generated simulated environment from which the spatial recording was generated. Even if the computer-generated simulated environment has changed, the spatial recording can still be provided at the original location at the time it was generated for viewing at a later point.

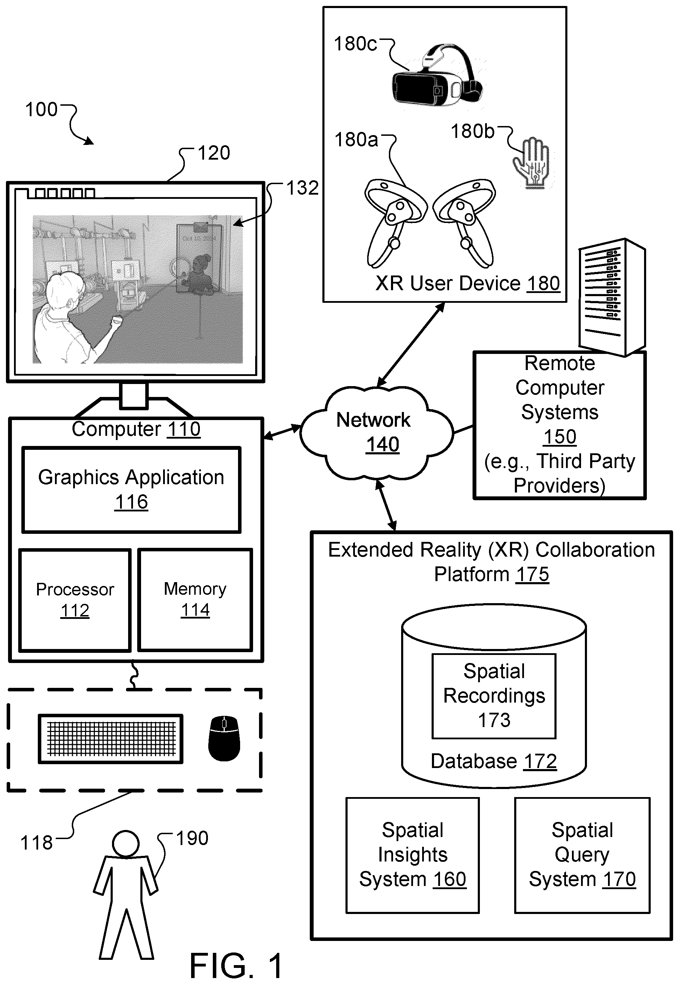

FIG. 1 shows an example of a system 100 usable to provide a computer-generated simulated environment in accordance with the implementations of the present disclosure. The system 100 includes a computer 110 and an XR user device 180. The computer 110 includes one or more display devices 120 and one or more input devices 118 (e.g., keyboard and mouse).

The computer 110 includes a processor 112 and a memory 114, and the computer 110 can be connected to a network 140, which can be a private network, a public network, a virtual private network, etc. The processor 112 can includes one or more hardware processors, which can each include multiple processor cores. The memory 114 can include both volatile and non-volatile memory, such as Random Access Memory (RAM) and Flash RAM. The computer 110 can include various types of computer storage media and devices, which can include the memory 114, to store instructions of programs that run on the processor 112, including a graphics application 116.

In some implementations, the XR user device 180 includes similar components as the computer 110. That is, the XR user device 180 can include a processor and a memory, wherein the memory stores instructions of programs that run on the processor, and the discussion below about the graphics application 116 can be equally applied to the XR user device 180. The XR user device 180 can also include one or more display devices and one or more input devices. For example, the input/display devices can include a VR/AR controller 180a, a VR/AR input glove 180b, and/or a VR/AR headset 180c.

The computer 110 is communicatively coupled to an XR collaboration platform 175 through the network 140. In some implementations, the computer 110 can run a graphics application 116 that can be a VR application, an AR application, a MR application, an XR application, a graphics design application, or another social or interactive graphics application. In some implementations, the graphics application 116 can be the front-end logic of the XR collaboration platform 175 connected to the network 140 that can run locally on the computer 110, remotely on a computer of one or more remote computer systems 150 (e.g., one or more third party providers' one or more server systems accessible by the computer 110 via the network 140) or both locally and remotely.

A user 190 can interact with the graphics application 116 to work on a computer-generated simulated environment. For example, the user 190 can interact with the graphics application 116 to view and/or modify various aspects of the computer-generated simulated environment, e.g., to add, remove, and manipulate 3D objects in a 3D environment. In some implementations, the computer-generated simulated environment is a graphic representation (a computer-generated representation) of a physical world, which can include both a to-be-built physical structure and a pseudo-structure, such as a building, a manufacturing facility, or a residential complex, which can be constructed based on independent work of the user 190, or collaborative work with one or more other users.

The graphics application 116 can help users involved in a task (a solo task or a collaborative task) to more effectively achieve their goals by facilitating the creation and display of a spatial recording(s) 173 within the computer-generated simulated environment. Spatial recordings 173 can be made for any of a variety of tasks performed in a 3D environment, such as a graphics design task, e.g., an interior design or an urban planning task in a design environment, designing or playing a game in a video-gaming environment, collaborative document sharing in a design setup, among other examples of tasks involving motion and interaction between objects (such as avatars) in the 3D space. Such spatial recordings can be viewed afterwards and/or can be used for further manipulation and editing. The graphics application 116 can thus support productive execution of meetings, training for real-world activities, collaborative spatial design, and social activities (e.g., chat) because during the execution process of such meetings, spatial recordings can be captured to include data about users and environment.

In some instances, when users collaborate on an interior design or an urban planning task in a design environment, the users can record a spatial recording(s) that can be stored at a particular location within the design environment, e.g., at a position of the user who recorded the spatial recording. In some cases, when the design environment is viewed at a subsequent iteration by other or same users, the user may be allowed to replay or view a stored playback of the spatial recording stored at the location in the environment. Such spatial recording can include a summary of the recorded discussions during the collaboration of users, for example, at the same or different version of the design environment.

In some instances, the recording and viewing of playbacks of spatial recordings can be performed in different instances (and potentially, different forms) of an environment (a desktop environment, an AR environment, a VR environment, an XR environment, or another environment) that represents a 3D model of a construction project, a plant, an urban field, among other examples. For example, an urban planning task involves a large group of users, e.g., civic leaders, developers, potential tenants, and other stakeholders, that collaborate on the design and creation of an urban project, such as a city center or a large residential complex. **In** this example, the large group of users can each view the same environment, generate spatial recordings in relation to different locations within the environment, and afterwards, view and/or modify these spatial recordings that have been generated by themselves or other users in the group. **In** this context, the spatial recordings improve the overall timeliness and efficiency of the process flow of the urban planning task, because each individual user can more likely be made aware of issues about the environment raised by other users.

In some instances, the graphics application 116, e.g., when it is configured as an interactive graphics application, allows one user to make changes to a computer-generated simulated environment and then share the computer-generated simulated environment with other collaborative users as changes are made. In these instances, the spatial recording(s) 173 generated within the computer-generated simulated environment can be maintained independent of the changes to the environment that are made. That is, a spatial recording generated within a previous version of the environment can be provided for viewing in context of an updated version of the environment.

The graphics application 116 can support capturing of multimodal events and actions performed by avatars representing recorded people and/or objects, the virtual gaze of the recorded people, conversations and gestures performed by avatars, and in-application events such as the users' interactions with the environment, e.g., through clicks and any added annotations such as measurements and sketches. The performance of actions, e.g., in relation to one or more objects, performed by one or more users acting with their avatars, the conversations performed by their avatars, and the in-application events can be recorded as part of a spatial recording 173. In implementations where the graphics application 116 is a social or collaborative graphics application that allows for communication between users interacting through different instances of the graphics application 116 in the computer-generated simulated environment or allows for keeping records for a particular user for their previous interactions with the computer-generated simulated environment (e.g., record keeping over time), the communication within these graphics application 116 can be captured and recorded as spatial recordings.

In some instances, when a spatial recording is generated, a user interface element (e.g., object, an identifier, a spatial note, a 3D visualization, or combination thereof)can be stored at a location of the environment associated with the user who recorded the spatial recording to provide access to at least some portion of the spatial recording and/or content generated based on analyzing the spatial recording to another user of the simulated environment. For example, the user interface element can be in the form of a spatial note that is stored at the simulated environment can be visualized (e.g., in a VR environment) when another user enters the environment and views the user interface element at the stored position, and can be provided accessible for interaction to obtain information about the spatial recording through the same view or into an interrelated view (e.g., into a connected environment, e.g., a table).

Thus, in the implementations where the computer-generated simulated environment can be provided as a hybrid environment that is an interconnected combination of both 2D and 3D environments, spatial recordings that capture aspects of objects in the environment can be generated and stored in relation to different locations within a 2D environment (e.g., a geo map) based on tracked positions of a user within the 2D environment, and the spatial recordings can be viewed later on within a 3D environment. The objects can include virtual objects (e.g., objects part of a 3D model of a part or the whole environment, virtual representation of real-world objects (e.g., in the case of an augmented reality environment that includes a virtual representation of a real-world objects in a real-world environment), or both.

Spatial recordings 173, such as those created through the graphics application 116 can be provided for storage in a database 172 included in or accessible by the XR collaboration platform 175. The databases 172 can be implemented either in a same hardware memory device or across multiple separate, e.g., distributed, hardware memory devices. The spatial recordings 173 stored in the database 172 can be used later on by the user 190 or other users to more effectively achieve their task objectives. In some instances, the spatial recordings 173 can be used to generate a playback that can be exposed for interaction through the graphics application 116 so that user can obtain insights related to the computer-generated simulated environment (e.g., and actions that can be performed or have been performed at positions within the environment). In some cases, the stored spatial recording can be stored and/or queried according to one or more of the insights or other criteria and according to querying techniques described throughout the present disclosure to identify relevant spatial records stored for the environment and available and/or accessible to users.

A spatial recording 173 can either be an extended-reality (XR) recording or a non-extended reality (non-XR) recording. The spatial recordings 173 can capture motion, orientation, position, and audio of objects, such as physical items or avatars of recorded people that are captured over time and space. For example, when generated within an XR environment, the spatial recordings 173 can be XR recordings or other volumetric recordings that capture motion (e.g., body or head motion), positioning (e.g., body or head position, or focal point position (also referred to as "eye gaze point"), and/or audio (e.g., voice or speech of a user) associated with an avatar of the user in a captured XR scene.

The spatial recording 173 can include data in any of a variety of modalities (types), e.g., depending on the hardware capabilities of the computer 110 and/or the XR user device 180, on the configurations of the graphics application 116, or both. For example, the spatial recording 173 can include data in an image modality (e.g., an image that has pixels where each pixel has pixel values), data in a video modality (e.g., a video that includes a sequence of video frames where each video frame is an image), data in an audio modality (e.g., an audio waveform), data in a text modality (e.g., a sequence of words), and so on.

Additionally or alternatively, the spatial recording 173 can include data in XR-specific modalities. For example, the spatial recording 173 can include data in a point cloud modality (e.g., a 3D point cloud that includes multiple data points), data in a coordinate system (e.g., eye gaze data in a 3D coordinate system that represents gaze direction of each eye of a user), and so on.

In some implementations, the spatial recording 173 includes data in a single modality, e.g., it can include data in any one of the example modalities mentioned above, whereas, in other implementations, the spatial recording 173 includes data in multiple modalities, e.g., it can include data in two or more of the example modalities mentioned above.

In some implementations, the graphics application 116 can be an access point by the user 190 for accessing the spatial insights services provided by a spatial insights system 160 included in the XR collaboration platform 175 to obtain playbacks that are generated based on the spatial recordings 173 stored in the database 172. In some implementations, the graphics application 116 can be an access point by the user 190 for accessing the spatial querying services provided by a spatial query system 170 included in the XR collaboration platform 175 to search for spatial recordings 173 stored in the database 172, e.g., to retrieve one or more spatial recordings 173 in response to a query.

In some implementations, the graphics application 116 can be used by the user 190 to navigate the computer-generated simulated environment. For example, the user 190 can navigate the computer-generated simulated environment with XR interactions such as teleporting with their controller. The graphics application 116 can support features such as addition, deletion, and arrangement of objects, e.g., ranging from building parts such as doors, windows, and floors, to plants (e.g., process plants, industrial plants) that include components such as pipes, tunnels, and machine tools) within a design space (e.g., 3D space). The graphics application 116 can provide measuring tools and techniques, e.g., digital rulers, compasses, and protractors, as well as simulation of operating objects, e.g., the opening and closing of joints, valves, and pumps.

The graphics application 116 provides a user interface 132 on a display device 120 of the computer 110. For example, the user interface 132 can be a visual programming interface or another graphical user interface that is either a 2D interface or a 3D interface. The user interface 132 can display the computer-generated simulated environment that is either a 2D interface environment or a 3D interface environment.

In implementations where the graphics application 116 is a social or collaborative graphics application, the computer-generated simulated environment can be shared across a plurality of users including the user 190 and the one or more other collaborative users. For example, the one or more other collaborative users can each receive a respective view of the same computer-generated simulated environment at different instances of the graphics application 116 running on different devices.

The user interface 132 can be operated on by using one or more input devices 118 of the computer 110 (e.g., keyboard and mouse). For example, the user interface 132 allows for the user 190 to provide input that creates a spatial recording 173 within the computer-generated simulated environment, input that can be used to obtain playback(s) or other visual/textual/audio objects that is generated based on the spatial recordings 173 and stored in the database 172. In some instances, the user interface 132 can receive a request for video or audio content associated with one or more spatial recordings stored in the database 172, which can be used to generate a query to search the spatial recordings 173 stored in the database 172 to identify a matching recording. In some instances, the spatial recordings 173 can be searched to identify one or more recordings that can be used to assist in a graphics design task. The spatial recordings 173 can be used to inform the user to more quickly generate an end-result for the graphics design task (e.g., a particular layout of the design environment involving a number of objects in a particular setup and/or positioning at a particular time point) that incorporates the feedback from other collaborative users of the design task, thereby improving the overall timeliness and efficiency of the process flow of the graphics design task.

While shown as separate devices in FIG. 1, the display device 120 and/or input devices 118 can also be integrated with each other and/or with the computer 110, such as in a tablet computer or a smartphone that provides a 2D interface (e.g., a touch screen can be an input/output device 118, 120). Moreover, in some implementations, the computer 110 can include or be part of an XR user device 180 that provides an XR interface.

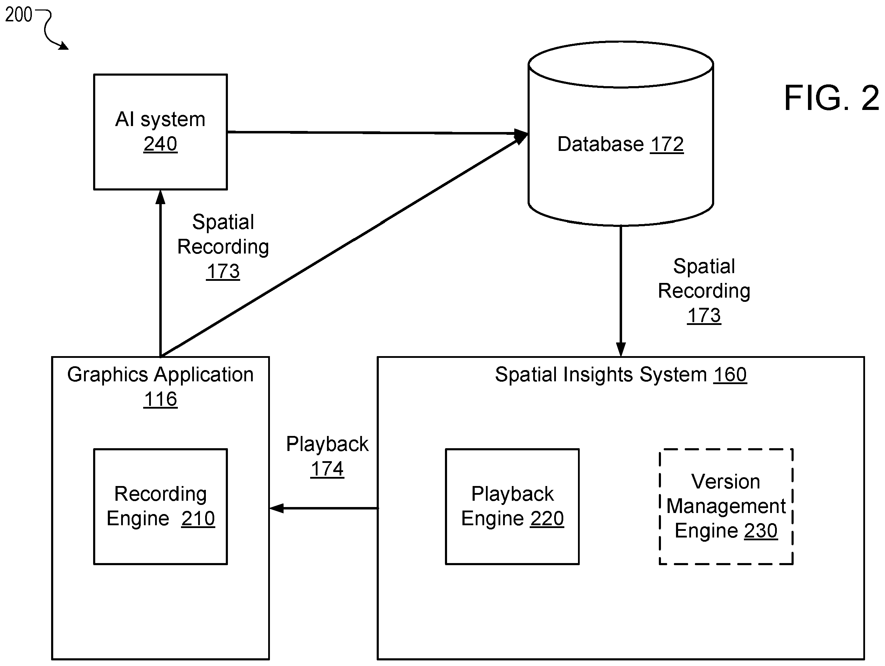

FIG. 2 is a schematic diagram 200 of the graphics application 116, the spatial insights system 160, the artificial intelligence (AI) system 240, and the database 172 in relation to each other. The graphics application 116 includes a recording engine 210. The spatial insights system 160 includes a playback engine 220, and, in some implementations, a version management engine 230.

The recording engine 210 includes implemented logic that is configured to generate spatial recording(s) 173 within the computer-generated simulated environment. The spatial recording 173 can include more information than a typical screen recording as they can capture interaction of a user with the computer-generated simulated environment including location, posture, gaze, and gestures of the user. In some implementations, spatial recordings can be recordings captured from one or more of a VR, AR, MR, or another XR environment representing a 3D scene, where one or multiple users can interact in the 3D scene.

In some implementations, while displaying the computer-generated simulated environment through the user interface 132, the graphics application 116 can additionally present one or more UI elements within the user interface 132 that can be used by the user to invoke the creation of the spatial recording 173. Examples of UI elements that may be used to create the spatial recording 173 include windows, buttons, menus, dialog or message boxes, lists, to name just a few.

After a user interaction with the one or more UI elements is received by the graphics application 116, the recording engine 210 starts a spatial recording 173 within the computer-generated simulated environment. During the spatial recording 173, the user could proceed normally, e.g., to work independently or collaborate with another user on a graphics design task.

At any time after the user has started the spatial recording 173, the user can manipulate or interact with the one or more UI elements to end the spatial recording 173. Then, the recording engine 210 can send the generated spatial recording 173 to the database 172 for storage. Additionally or alternatively, the recording engine 210 can send the generated spatial recording 173 to another system for further processing to generate additional data based on the spatial recording 173.

In particular, the generated spatial recording 173 can be sent to an artificial intelligence (AI) system 240 that provides a range of AI services (performs a range of AI tasks) to generate additional data based on the spatial recording 173. The AI system 240 can perform various AI tasks including generating digital data (visual, textual, audio, or combination thereof) based on the spatial recording 173.

For example, the AI system 240 can provide transcription services, i.e., can further process the spatial recording 173 to generate a machine transcription of the spatial recording 173. As another example, the AI system 240 can provide translation services, i.e., can further process the spatial recording 173 to generate a machine translation of the spatial recording 173. As another example, the AI system 240 can provide summarization services, i.e., can further process the spatial recording 173 to generate a summary of the spatial recording 173. As another example, the AI system 240 can provide content modification services, i.e., can further process the spatial recording 173 to generate a modified, e.g., shortened or otherwise optimized, version of the spatial recording 173.

As yet another example, the AI system 240 can provide keyword detection services, i.e., can further process the spatial recording 173 to extract one or more keywords from the spatial recording 173. For example, the AI system 240 can generate keyword data that identifies, as one or more keywords, one or more words from among a plurality of words included in the machine transcription of the spatial recording 173.

In some implementations, the one or more words includes those in the transcript that have importance scores that satisfy a predetermined importance criterion. The predetermined importance criterion can be defined in terms of a predetermined, threshold importance score. In some implementations, the threshold importance score is a configurable value of the AI system 240 (e.g., by a user or automatically by the AI system 240) that may vary from user to user, from environment to environment, and/or vary from task to task. For example, the AI system 240 can compute an importance score for each of the plurality of words in a machine transcription generated for a spatial recording and then select the one or more words based on their importance scores. For example the one or more words that are selected can be determined as words that have the highest importance scores (of a predetermined number of words), or words that have important scores greater than or equal to the predetermined, threshold importance score.

Such an importance score can be computed by the AI system 240 in any of a variety of ways. For example, the importance score can be computed as a confidence score of the word that represents a likelihood that the word is an accurate text representation of a spoken utterance. As another example, the importance score computed as an information density score of the word that indicates an amount of information contained within the word. As another example, the importance score computed as a speech content probability score of the word that represent a likelihood that the word is part of a speech or non-speech (e.g., background noise, sound effect, music, or other non-verbal communication).

The AI system 240 implements one or more neural networks trained to provide services for processing and generating digital data based on provided spatial recordings generated by users of the graphics application 116. In some cases, the generated spatial recording 173 can be sent to a single AI system that provides different kinds of services discussed above by implementing either different neural networks for different services (tasks), e.g., one neural network for providing transcription services, and another neural network for providing translation services, or a single multi-task neural network for providing all kinds of services, e.g., one neural network for providing both transcription and translation services.

In any case, the additional data generated by the AI system 240 can then be stored in association with the spatial recording 173 in the database 172. For example, for each spatial recording 173, the additional data to be stored in association with the spatial recording 173 can include one of more of: the machine transcription of the spatial recording 173, the machine translation of the spatial recording 173, the summary of the spatial recording 173, the modified version of the spatial recording 173, or the keyword data of the spatial recording 173.

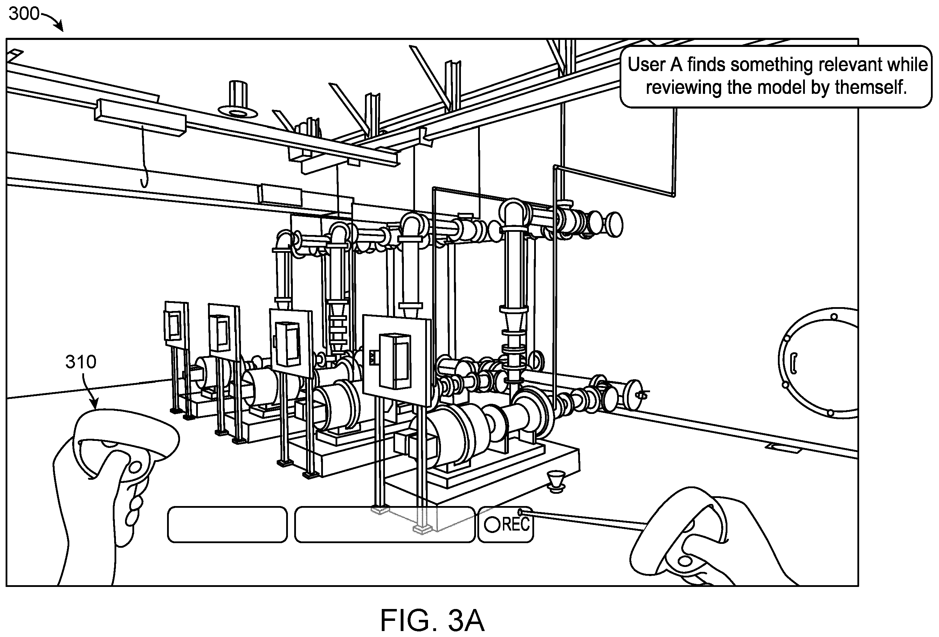

FIG. 3A shows an example user interface 300 provided for display to a user accessing an XR environment as a computer-generated simulated environment to generate a spatial recording in accordance with implementations of the present disclosure. In the example of FIG. 3A, the user interface 300 includes a "point-and-click"-style user interface element ("REC") that relies on input from a pointer 310 (e.g., the VR/AR controller as illustrated) or another input device (e.g., a mouse) to manipulate or interact with interface element ("REC"). In another example, the user interface 300 can include a "gaze-and-click"-style user interface element that relies on user gaze at an on-screen location corresponding to the user interface element to manipulate or interact with interface element. In another example, the user interface can include a voice activation user interface element that relies on voice command inputs from the user to manipulate or interact with interface element.

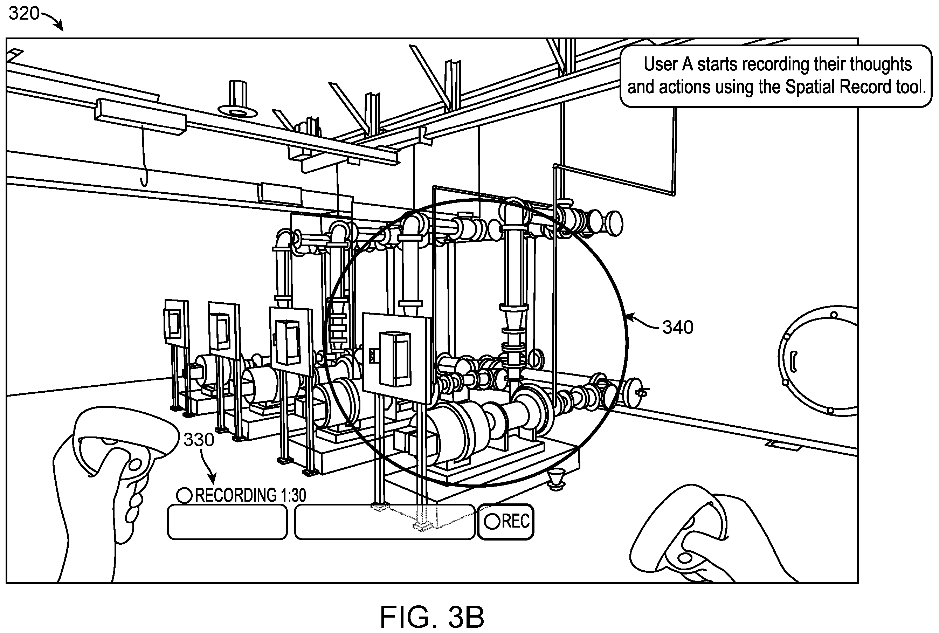

FIG. 3B shows another example user interface 320 provided for display to a user accessing an XR environment to generate a spatial recording in accordance with implementations of the present disclosure. As shown, the user interface 320 includes a time length element ("Recording 1:30") that represents the progression of time since the beginning of the spatial recording 173 within the computer-generated simulated environment.

In the example of FIG. 3B, since the computer-generated simulated environment is the XR environment, a spatial recording, such as the spatial recording 173 of FIG. 2 can be generated by a recording engine, such as the recording engine 210 of FI. 2, where the recording can be an XR recording or another volumetric recording that captures the interactions between the user and the XR environment. For example, the spatial recording 173 can capture motion (e.g., body or head motion), positioning (e.g., body or head position, or focal point position (also referred to as "eye gaze point") (illustrated as the circle 340 in FIG. 3B)), and/or audio (e.g., voice or speech of a user) associated with an avatar of the user in a captured XR scene. The spatial recording 173 can generally include additional information.

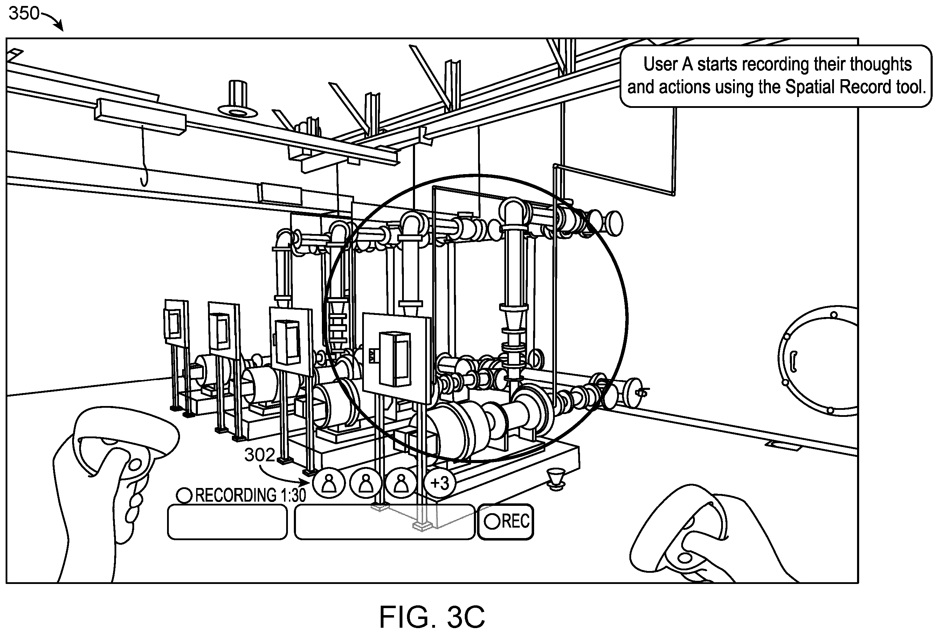

FIG. 3C shows another example user interface 350 provided for display to a user accessing an XR environment to generate a spatial recording in accordance with implementations of the present disclosure. The XR environment in this example is accessible to be joined by multiple users (where one or more of which are each identified by a user interface element presented next to the time length element). The multiple users can join the XR environment through the same or different XR user devices and can be provided with options to view the same or different XR scenes of the XR environment.

In the example of FIG. 3C, the spatial recording 173 that is being generated by the recording engine 210 can capture the interactions between the multiple users in the XR environment, in addition to the interactions between each of the multiple users and the XR environment. For example, the spatial recording 173 can capture audio (e.g., voice or speech of a user) associated with an avatar of each of the multiple users in the captured XR scene that represents different dialog turns in a conversation between the avatars of the multiple users. As illustrated, the user interface includes an array 302 of avatars. The array 302 of avatars includes at least some avatars correspond to at least some of the multiple users that participate in the conversation.

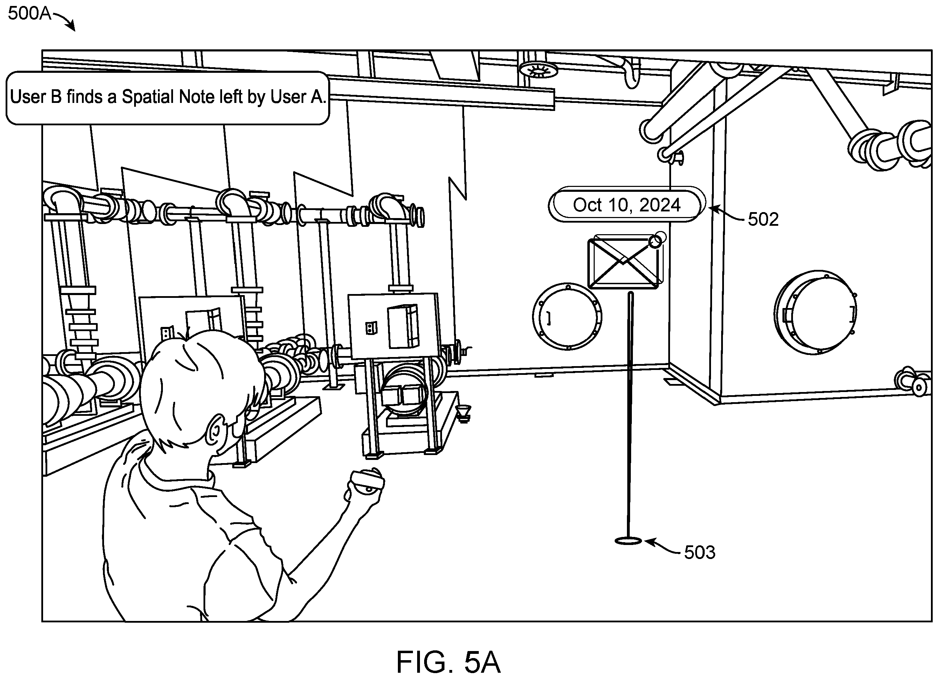

In some implementations, the graphics application 116 can be configured to generate, maintain, and operate interconnected environments across multiple user devices where an XR environment can be presented. In some instances, the graphics application 116 can present assets (objects or avatars of users) within the XR environment as viewed by each of the multiple user devices. In some instances, the assets that can be presented can be playbacks generated based on spatial recording and triggered to be presented to a user when a user interacts with a spatial note, for example, as described in relation to FIGS. 5A-D, 6, 7A, 8C, 9, and 10A-B. In some instances, two or more users who are viewing the XR environment through their respective device can be provided with a shared perspective view of an asset included the XR environment while spatial relationships between avatars are maintained o. In this manner, the view of the XR environment can be maintained as the same when presented to multiple users while at the same time, the users can see other users as spatially distant avatars to maintain the understanding of a multi-user viewing experience but the users can be provided with a view of a given asset from the same position and perspective as other users. Various types of implementations for generating a shared perspective view can be used with the presently disclosed subject matter, including providing the shared perspective view by rotating an asset to match a perspective of the user or changing a position of an avatar of the user to match a shared perspective so that an asset is perceived from the same perspective, such as described in U.S. Application No. 18/506,974 filed on November 10, 2023, and titled "Shared 3D perspective viewing of an asset in an extended reality system", which application is hereby incorporated by reference in its entirety.

In some implementations, the shared perspective view can be provided by rotating an asset to match the perspective of each user based on the view that is shared. In some implementations, the shared perspective view can be provided by changing the position of the avatars of the users to match the shared perspective so that they can perceive the model from the same perspective. In those implementations, the users associated with avatars in the XR environment can be gathered in an avatar stack that can be visualized as a tray of avatars included in the shared perspective mode in front of the generated view for the respective user. The tray can include avatars correspond to the users that are in the shared perspective mode. In some cases, the avatars in the tray can be rendered as 3D avatars (one or more of them and in combination with one or more that are 2D avatars) with a 3D position and a 3D orientation, where the avatars in the stack will be rendered with an offset based on the stack's 3D position and orientation (and optionally, the number of avatars to be included in the tray) so that the avatars (in the tray) can be included in the shared perspective mode where the avatars have the same viewpoint. In the avatar stack mode, since all the avatars have the same viewpoint, for each one of the avatars in the stack, the other avatar(s) are rendered in their view with an offset from their position so that the other avatar(s) can be seen. The other avatar(s) are rendered by repositioning according to a predefined offset from the shared position, where their gaze and pointing at the content that in the XR environment is reoriented as an adjustment that is needed in view of the offset from the viewpoint of the avatar.

In these implementations, when the multiple users that participate in a conversation are grouped in an avatar stack that shares the same perspective view when viewing the XR environment by having their viewpoint repositioned for them to enter the stack, the multiple users that participate in the conversation can see each other's avatars in a transformed way, offset to align with the change in the viewpoint of the respective user due to this repositioning. For example, implementations for generating such shared perspective view associated with grouping users in an avatar stack be used with the presently disclosed subject matter, including providing the shared perspective view by rotating an asset to match a perspective of the user or changing a position of an avatar of the user to match a shared perspective so that an asset is perceived from the same perspective, such as described in U.S. Application No. 18/506,974 filed on November 10, 2023, and titled "Shared 3D perspective viewing of an asset in an extended reality system", which application is hereby incorporated by reference in its entirety.

In some instances, the avatar corresponding to a speaker can be provided with a view of the multiple users as an avatar stack including multiple avatars of users, so that the avatar corresponding to the speaker can view the other avatars that are grouped without sharing their viewpoint. Additionally, the users can view a spatial note provided in the XR environment in this shared perspective view, and if a user of the users grouped in an avatar stack decides to interact with the spatial note and view a playback recording as described in the present disclosure, the user can be moved out of the avatar stack and provided with the view of the playback or the view of the playback can be shared between the user and all other users associated with the avatar stack. In such manner, each of the users associated with an avatar in the avatar stack will be provided with a shared perspective view of the playback from a viewpoint associated with the stack.

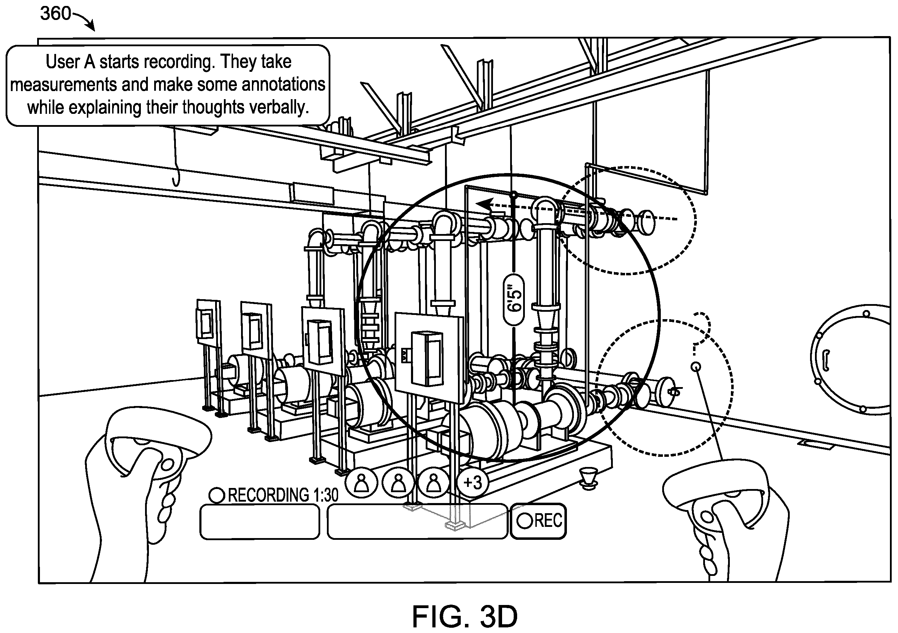

FIG. 3D shows another example user interface 360 provided for display to a user accessing an XR environment to generate a spatial recording in accordance with implementations of the present disclosure. In this example, the graphics application 116 provides measuring tools, and the spatial recording 173 that is being generated by the recording engine 210 can include measurement data generated as a result of user taking measurements within the XR environment by using the measuring tools.

For example, as illustrated in FIG. 3D, the measurement data can include distance and/or directional measurements between respective points on the surfaces of two or more objects in the XR environment. As another example, the measurement data can include angle measurements, e.g., a horizontal angle measurement and/or a vertical angle measurement between two or more surfaces. As another example, the measurement data can include force measurements of an operating object and movement speed measurements of a dynamic object.

Analogously, the graphics application 116 can provide annotation tools, and the spatial recording 173 that is being generated by the recording engine 210 can include annotation data generated as a result of user making annotation within the XR environment by using the annotation tools. Examples of annotation data include text annotations, graphic annotations (e.g., 2D or 3D sketches, illustrated as the circle, question mark, and the arrow in FIG. 3D), building information modeling (BIM) issues, action items for other collaborative users, and any other kinds of markup supported by the graphics application 116.

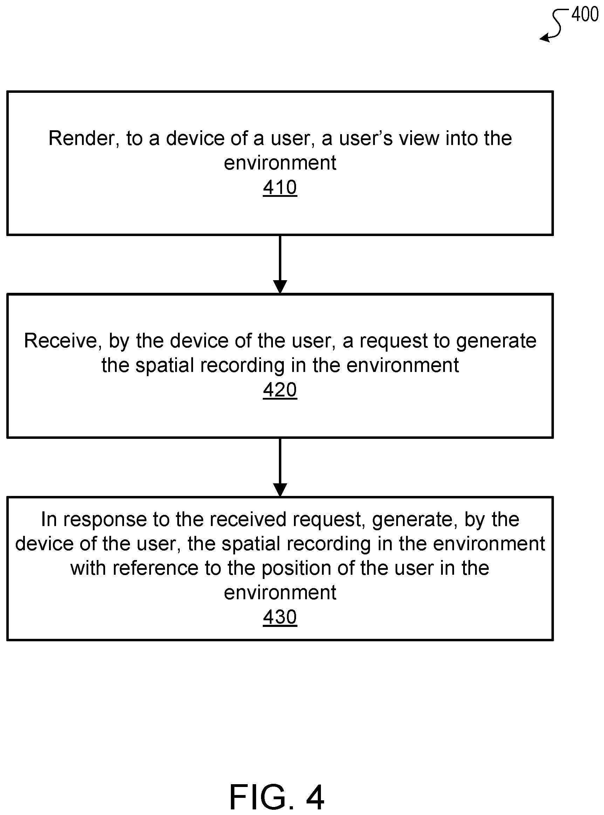

FIG. 4 shows an example of a process 400 to generate a spatial recording in accordance with implementations of the present disclosure. For example, the process 400 can be executed by the computer 110 or the XR user device 180 of FIG. 1.

At 410, a user's view into a computer-generated simulated environment is rendered by a graphics application to an output device of a user device, e.g., within a user interface displayed on the output device for presentation to a user. For example, the user device can be a computer and/or an XR user device. The user's view is generated by the graphics application in accordance with the pose (position and orientation) of an avatar of the user in the computer-generated simulated environment. For example, the pose includes a 3D position established for the user device or controller (e.g., VR/AR controller and/or VR/AR controller) as well as movement (e.g., up and down, left and right, and rotation) within the computer-generated simulated environment that can be identified by tracking movements of the user device or controller.

At 420, a request to generate the spatial recording in the environment is received by the graphics application through an input device of the user device. In some implementations, the request is received by way of a user interaction with one or more UI elements presented within a user interface provided by a graphics application, e.g., the user interface 132 provided by the graphics application 116, that is presented on the output device that is displaying the computer-generated simulated environment.

At 430, in response to the received request, the spatial recording is generated by the user device. The spatial recording is generated by graphics application in the computer-generated simulated environment with reference to the pose (position and orientation) of the avatar of the user in the computer-generated simulated environment. For example, the spatial recording can focus on an XR scene of a smaller portion of the computer-generated simulated environment that is within a proximity to the avatar of the user of the user device. On the other hand, the spatial recording could exclude an XR scene of the remaining portion of the computer-generated simulated environment, for example, that is outside the proximity of the avatar of the user, or outside of the field of view of the avatar.

To generate the spatial recording, a recording engine of the graphics application that is running on the user device can consume sensor data provided by any of a variety of sensors that are connected to the computer and/or the XR user device. Some of the sensors can be local to, e.g., on-board, the computer and/or the XR user device while some other sensors can be remote from but connected to the computer and/or the XR user device. For example, a sensor can be attached to the body of the user (e.g., on the head, torso, and so on).

Examples of the sensors include a motion sensor (e.g., an accelerometer), a position sensor, a temperature sensor, a location sensor (for example, a Global Positioning System (GPS) receiver and controller), an eye tracking sensor (that collect focal point position data), a microphone (that collect audio data (e.g., sounds from the user and/or environment), and a peripheral sensor (e.g., that collect skin temperature data or pulse data).

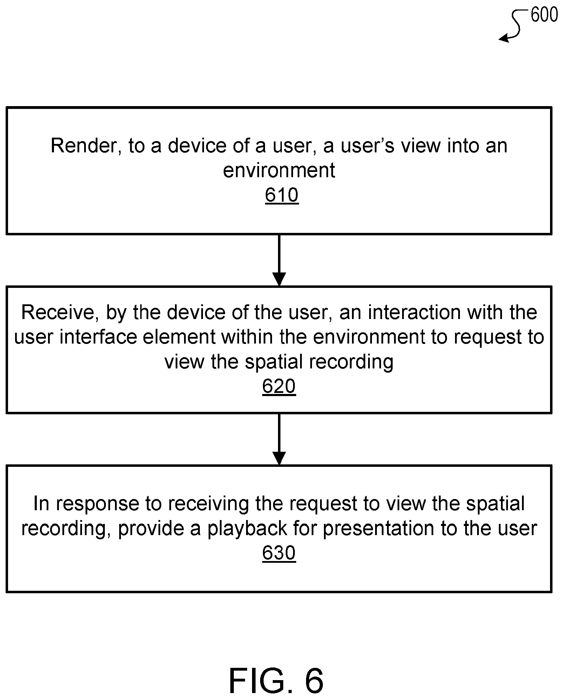

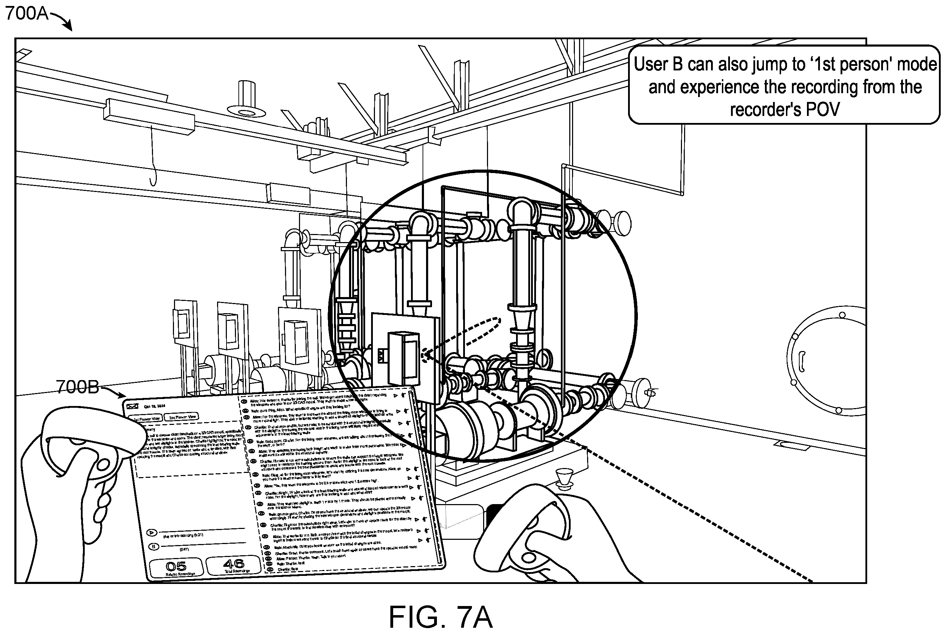

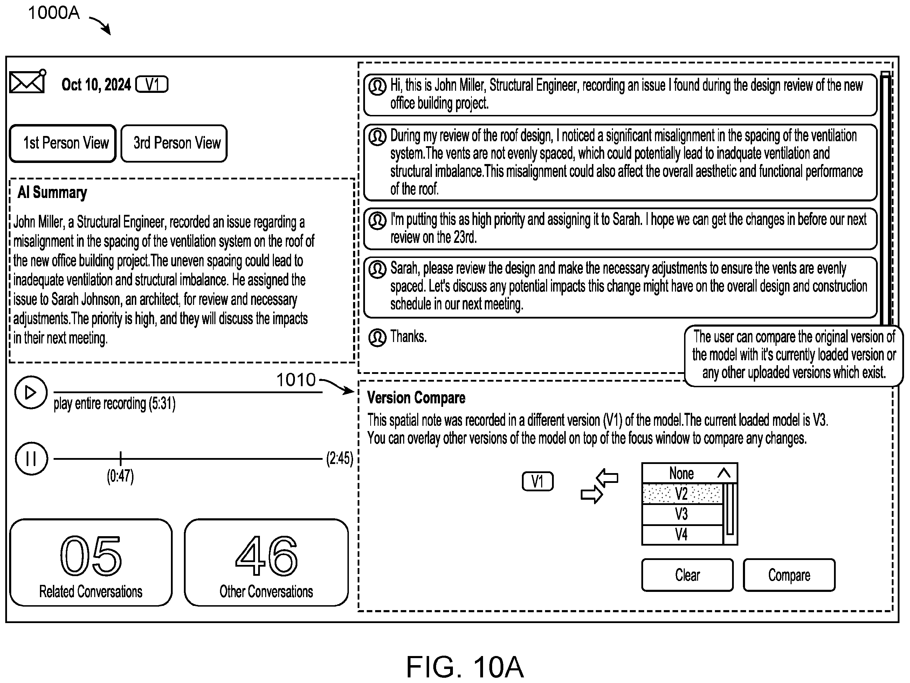

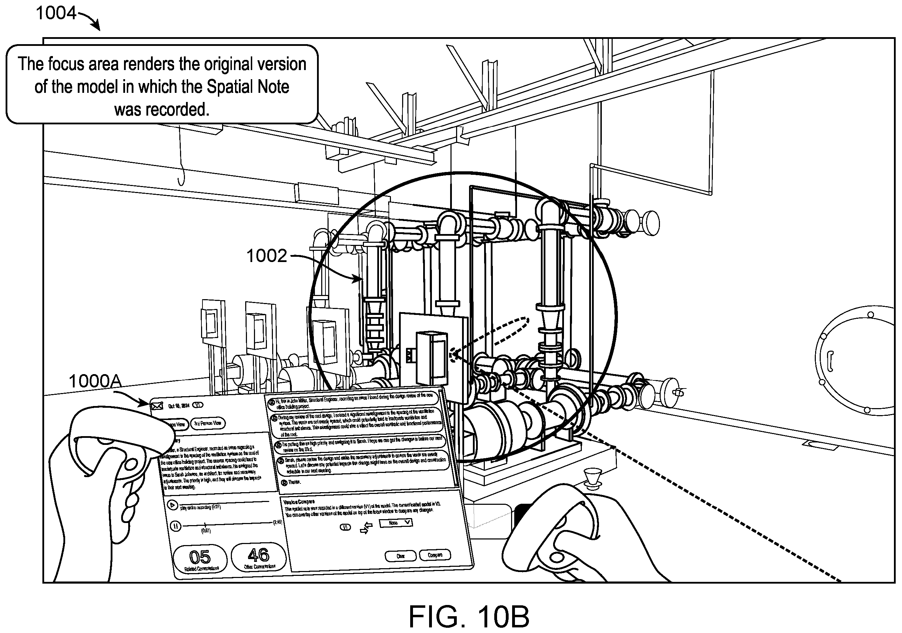

Turning back to FIG. 2, the playback engine 220 includes implemented logic that is configured to generate a playback 174 based on the spatial recording 173. The playback engine 220 can generate the playback 174 based on a spatial recording 173 stored in the database 172 that comes out as a result from a search initiated either actively or passively by a user by using the graphics application 116 (e.g., as discussed with reference to FIGS. 10-11), or in response to a direct request for the spatial recording 173 from the database 172 submitted by a user by using the graphics application 116 (e.g., as discussed with reference to FIG. 6 and FIGS. 7A-B). The playback engine 220 can generate the playback 174 based on a portion of the spatial recording 173 or as a whole.

Once generated, the playback engine 220 can provide the playback 174 to the graphics application 116 for presentation to the user within the user interface 132 on the display device. For example, the display device can be the display device 120 connected to the computer 110, the XR headset 180c connected to the computer 110, or another XR user device that can serve as a standalone display device with display capabilities of the playback 174 generated from the spatial recording 173.

In some implementations, while displaying the computer-generated simulated environment through the user interface 132, the graphics application 116 can additionally present one or more user interface (UI) elements within the user interface 132 that indicates the existence of a spatial recording 173 within the computer-generated simulated environment. Examples of UI elements that may be used to present the playbacks 174 include windows, buttons, menus, dialog or message boxes, lists, to name just a few.

After a user interaction with a UI element of the one or more UI elements is received by the graphics application 116, the graphics application 116 generates a request for a playback 174 that references the spatial recording 173 associated with the UI element, and submits the request to the playback engine 220 of FIG. 2. In this way, the UI element is used by the user to invoke the presentation of the playback 174 of the spatial recording 173.

In some implementations, unlike the UI elements that can be used by the user to invoke the creation of the spatial recording 173 and that are presented next to the scene of the computer-generated simulated environment (as in the example of FIG. 3A), the UI elements that can be used by the user to invoke the presentation of the playbacks 174 are presented within the scene of the computer-generated simulated environment, such that UI elements "blends" into objects rendered in the computer-generated simulated environment.

FIG. 5A shows an example user interface 500A provided for display to a user accessing an XR environment to present a playback in accordance with implementations of the present disclosure. The user interface 500A is a 3D interface that presents 3D content that include a 3D scene, which is a particular view of a 3D environment depending on the position/location of the user viewpoint within the 3D environment.

In the example of FIG. 5A, the user interface includes a "point-and-click"-style user interface element 502 (illustrated as a spatial note) that relies on input from a pointer (e.g., the VR/AR controller as illustrated) or another input device (e.g., a mouse) to manipulate or interact with user interface element 502. In another example, the user interface can include a "gaze-and-click"-style user interface element that relies on user gaze at an on-screen location corresponding to the user interface element to manipulate or interact with interface element. In another example, the user interface can include a voice activation user interface element that relies on voice command inputs from the user to manipulate or interact with interface element.

The user interface element 502 indicates the existence of a spatial recording that has previously been generated in the XR environment by a user. Because the spatial recording was generated by graphics application 116 in the XR environment with reference to the pose (position and orientation) of the avatar of the user in the XR environment that is associated with the recording, the user interface element 502 indicating the existence of a spatial recording can be logically positioned with reference to the previous pose (position and orientation) of the avatar of the user at the time they generated the spatial recording. In the example of FIG. 5A, the "point- and-click"-style user interface element 502 indicating the existence of a spatial recording is positioned at the same position 503 in the XR environment as the avatar of the user when they generated the spatial recording. In some instances, the spatial recording may have been generated at a previous version of the XR environment, while the spatial recording location may be propagated to a different version (subsequent) of the XR environment through which it is accessible. In some instances, at least some part of the XR environment may be different over different version. In some instances, the XR environment in different version may represent same 3D space dimensions, where the 3D space may represent a building in different versions (e.g., at different phases of a construction project).

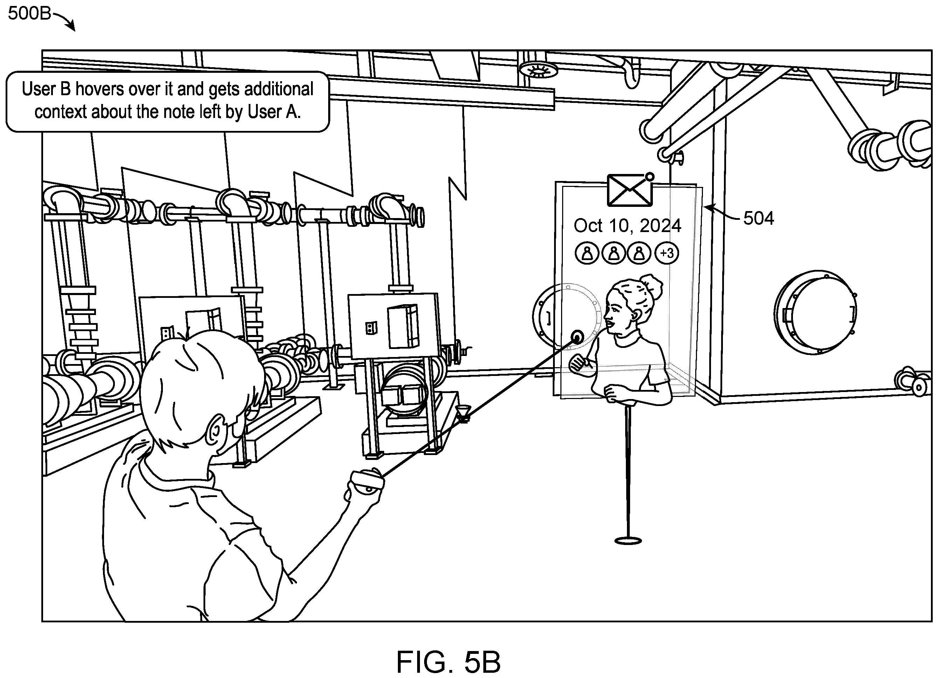

FIG. 5B shows another example user interface 500B (a 3D interface) provided for display to a user accessing an XR environment to present a playback in accordance with implementations of the present disclosure. In the example of FIG. 5B, the user interface can include a "point-and-click"-style user interface element 504 that relies on input from a pointer (e.g., the VR/AR controller as illustrated) or another input device (e.g., a mouse) to manipulate or interact with interface element 504.

Unlike the interface element 502 in the example of FIG. 5A, the user interface element 504 provides additional context about the spatial recording. Specifically, in the example of FIG. 5B, the user interface element 504 identifies the users involved in the spatial recording and the user that generated the spatial recording, e.g., by way of showing an avatar for each involved user as part of or in association with the user interface element 504, in addition to information about a time (year, month, day, and optionally, hour, minute, and second) at which the spatial recording was generated.

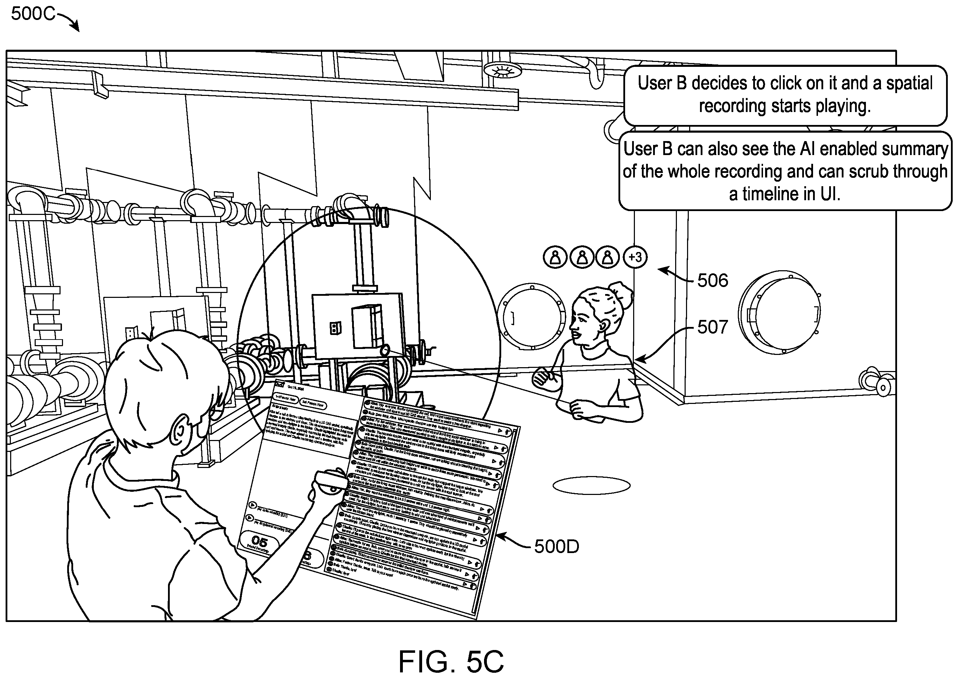

FIG. 5C shows another example user interface 500C (a 3D interface) provided for display to a user accessing an XR environment to present a playback in accordance with implementations of the present disclosure. The playback 506 that is being presented within the user interface as part of the XR scene of the XR environment can be generated by the playback engine 220 of FIG. 2 in response to a request to view a spatial recording received from the graphics application 116 of FIG. 2.

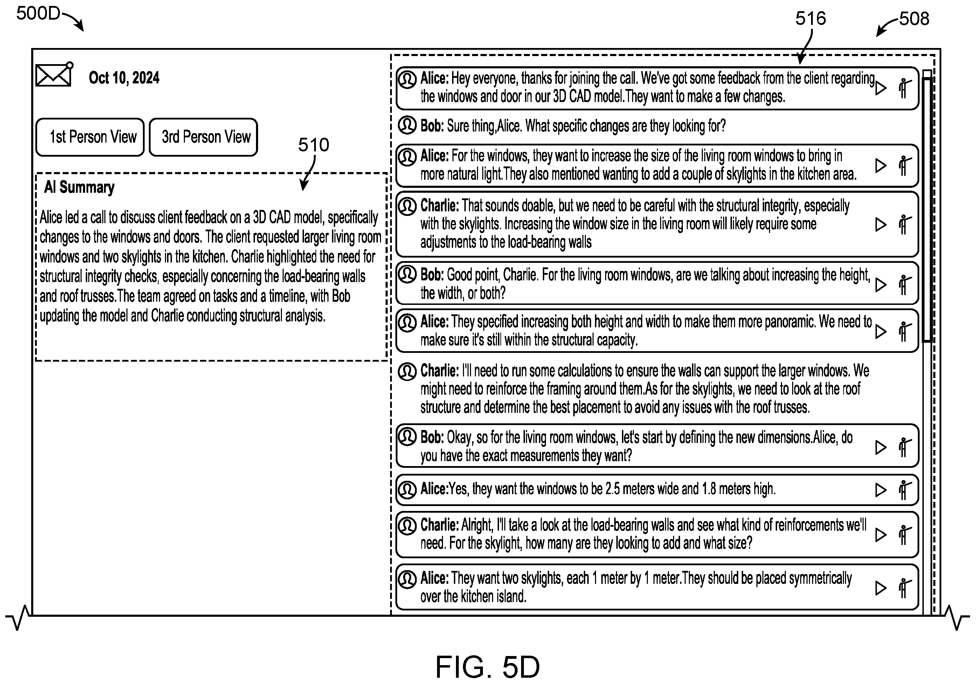

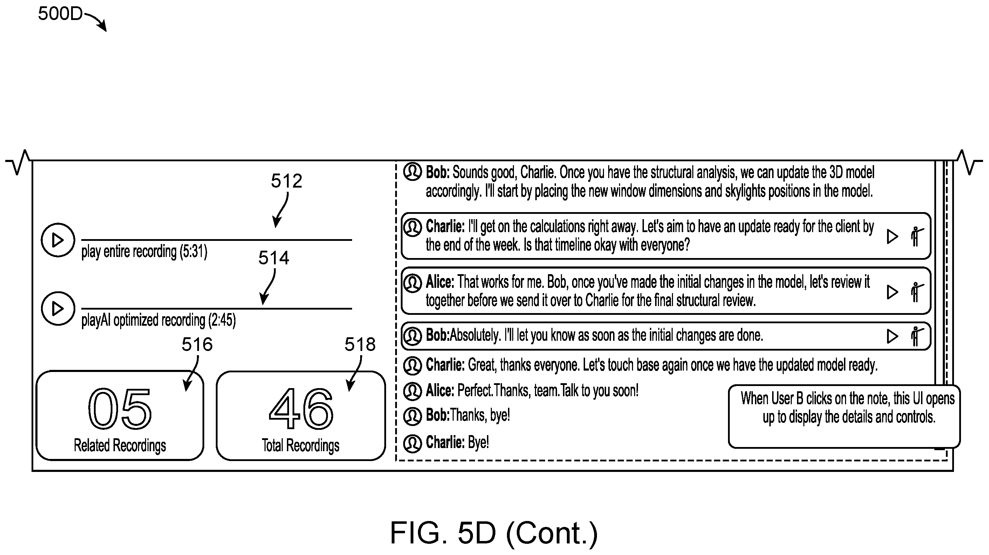

In the example of FIG. 5C, the playback 506 is generated by the playback engine 220 of FIG. 2 in a third-person view mode. Thus, the playback corresponds to a view of what may be viewed by the user in the XR environment who requested to view the spatial recording (and not a view of what may be viewed by a user in the XR environment who generated the spatial recording). FIG. 5C thus illustrates that the playback engine 220 of FIG. 2 provides an avatar 507 associated with another user who generated the spatial recording in the XR environment, for presentation to the user who requested to view the spatial recording. The avatar 507 is presented at a position of the other user in the XR environment, and the spatial recording was recorded by the other user when the other user was at that position in the XR environment. For example, the playback 506 can include a video that shows the body movements of the avatar or an immersive 3D playback of the avatar 507 while generating the spatial recording. The user, presented with the playback 506 in the user interface 500C of the XR environment, is also presented with another user interface 500D as shown in an enlarged format on FIG. 5D. The user interface 500D can includes textual content related to the generated spatial recording and the provided playback 506 within the user interface 500C. The content provided on the user interface 500D as shown on FIG. 5C is the same as the content shown on 500D on FIG. 5D, but shown in different size for the sake of the example.

FIG. 5D shows another example user interface 500D provided for display to a user accessing an XR environment to present a playback in accordance with implementations of the present disclosure. The playback 508 that is being presented within the user interface 500D can be generated by the playback engine 220 of FIG. 2 in response to a request to view a spatial recording received from the graphics application 116. In the example of FIG. 5D, however, the playback 508 that is generated by the playback engine 220 of FIG. 2 includes additional data that is generated based on the spatial recording.

Specifically, the playback 508 is presented within the user interface 500D that is a graphical user interface (e.g., a 2D interface) provided by the graphics application 116. The user interface 500D includes an AI summary window 510 that presents a summary of the spatial recording. For example, the summary can be generated by AI system 240 of FIG. 2 based on the spatial recording.

The summary can be in the form of a natural language text sequence that is shorter than the machine transcription of the spatial recording (which can be in the form of another natural language text sequence) but summarizes the machine transcription, i.e., represents the most important or relevant information within the machine transcription. The summary can either be an extractive summary that is made up of text from the machine transcription, or alternatively be an abstractive summary that can contain different text from the machine transcription.

The user interface 500D is configured to present the spatial recording. The user interface 500D includes a first command bar 512 for controlling the presentation of the spatial recording. The first command bar 512 includes a play button (which toggles with a pause button) and, optionally, other typical player controls. For example, the first command bar 512 can also include one or more player controls that allow a user to rewind or fast forward the spatial recording being played.

The user interface 500D includes a second command bar 514 for controlling the presentation of a modified version of the spatial recording. For example, the optimized version of the spatial recording can be a shortened (truncated) or otherwise optimized version of the spatial recording that generally has the same data modality(ies) as the original version of the spatial recording, but is more data efficient, e.g., is shorten in length, lower in resolution, or both. Like the summary, the optimized version of the spatial recording can be generated by the artificial intelligence (AI) system 240 of FIG. 2 based on the spatial recording.

The second command bar 514 is displayed within the user interface 500D proximate to first command bar 512. The second command bar 514 includes a play button (which toggles with a pause button) and, in some implementations, other typical player controls. For example, the second command bar 514 can also include one or more player controls that allow a user to rewind or fast forward the spatial recording being played.

The user interface 500D includes a transcription window 518. The transcription window 518 displays the machine transcription of the spatial recording. The machine transcription can be in the form of a natural language text sequence. Like the summary, the machine transcription can be generated by the artificial intelligence (AI) system 240 of FIG. 2 based on the spatial recording.

In the example of FIG. 5D, the machine transcription is displayed in the format of dialog turns. Thus, the transcription window 518 includes a plurality of sections, each section corresponding to a dialog turn spoken by a user. Each section includes the machine transcription of the spoken utterances included in the dialog turn spoken by the corresponding user and, in some implementations, one or more graphical representations that identify the corresponding user. In some implementations, each section includes a play button (which toggles with a pause button) and, optionally, other typical player controls for controlling the presentation of the portion of the spatial recording that corresponds to dialog turn.

In an analogous example, instead of or in addition to the transcription window 518, the user interface 500D can include translation window that displays the machine translation of the spatial recording. The machine transcription can be in the form of a natural language text sequence in a target language that is a translation of the machine transcription of the spatial recording that is in a source language. Like the summary, the machine translation can be generated by the artificial intelligence (AI) system 240 of FIG. 2 based on the spatial recording.

FIG. 6 shows an example of a process 600 to provide a playback that is generated based on a spatial recording for presentation in accordance with implementations of the present disclosure. For example, a spatial insights system, e.g., the insights query system 160 of FIG. 2, appropriately programmed in accordance with this specification, can perform the process 600.

At 610, a user's view into a computer-generated simulated environment is rendered by a graphics application to an output device of a user device, e.g., within a user interface displayed on the output device, for presentation to a user. For example, the user device can be a computer and/or an XR user device. The user's view is generated by the graphics application in accordance with the pose (position and orientation) of an avatar of the user in the computer-generated simulated environment. For example, the pose includes a 3D position established for the user device or controller (e.g., VR/AR controller and/or VR/AR controller) as well as movement (e.g., up and down, left and right, and rotation) within the computer-generated simulated environment that can be identified by tracking movements of the user device or controller.

The user's view into the computer-generated simulated environment includes or is associated with a user interface (UI) element positioned at a position in the computer-generated simulated environment to indicate that a spatial recording has been stored in the computer-generated simulated environment. Examples of the UI element are discussed in relation to FIGS. 5A-5B, e.g., the user interface elements 502 and 504. The position of the UI element can be different from, but proximate to, the position of the user. Because the UI element indicates the existence of the spatial recording, the position at which the UI element is placed can be the same as the position of an avatar of a user when they generated the spatial recording.

In some cases, the user that generated the spatial recording is the same user which requested the playback of the spatial recording. That is, the user mentioned with reference to FIG. 4 can be the same user mentioned with reference to FIG. 6. More generally, in other cases, the user that generated the spatial recording is different from the user which requested the playback of the spatial recording. That is, the user mentioned with reference to FIG. 4 can be different from the user mentioned with reference to FIG. 6.

Analogously, in some cases, the user device that generated the spatial recording is the same user device to which the playback is being provided for presentation. That is, the user device mentioned with reference to FIG. 4 can be the same user device mentioned with reference to FIG. 6. More generally, in other cases, the user device that generated the spatial recording is different from the user device to which the playback is being provided for presentation. That is, the user device mentioned with reference to FIG. 4 can be different from the user device mentioned with reference to FIG. 6. In those cases, the user devices can be the same type of devices, e.g., both can be XR user devices, or can alternatively have different types, e.g., the user device that generated the spatial recording can be an XR user device, while the user device to which the playback is being provided for presentation is a computer.

At 620, an interaction with the UI element within the computer-generated simulated environment to request to view the spatial recording (that is included in or associated with the user's view into the computer-generated simulated environment) is received by an input device of the user device. Depending on the hardware capabilities of the user device, the user can interact with the UI element in any of a variety of ways. Examples of how the user can interact with the UI element are discussed in FIGS. 5A-5B.

At 630, in response to receiving the request to view the spatial recording, a playback is provided for presentation to the user. Examples of the playback that can be generated by a playback engine based on the spatial recording in response to the request are discussed in FIGS. 5C-5D.

In some implementations, the playback is generated by the playback engine in a third-person view mode. That is, while rendering the user's view into the computer-generated simulated environment to the output device for presentation based on the position and orientation of the user in this environment, the user device also provides the playback for presentation to the user from the same perspective as the view of the environment. As such, the playback is generated by the playback engine based on the spatial recording from a perspective of the user in the environment at the pose (position and orientation) of the avatar of the user in the computer-generated simulated environment, even though the spatial recording was recorded from a different perspective, i.e., from the position of the avatar of the user in the computer-generated simulated environment at the time of the recording. In this way, the user who is viewing the playback is provided with a third-person view into the recorded content of the spatial recording.

In some instances, the spatial recording may be recorded in another environment outside of the hybrid environment, for example, in the context of rendering a 2D interface representing a 2D map where spatial recordings can be viewed in a 3D environment and correspond to spatial recordings generated in the real-world or in another computer-simulated 3D environment. For example, the spatial recording can be generated in a real-world environment at a particular geographic location or a geo-area or at a computer simulated work representing a geographical area, plant, or field. In some instances, the location in the environment from which the spatial recording was made can be mapped to a location represented in at least a portion of the hybrid environment that is presented to the user. The mapped location within the hybrid environment may be a location where a spatial note is stored and associated with the generated spatial recording that was generated in an external environment (e.g., real-world or another computer simulated environment). For example, the portion of the hybrid environment can be a 2D user interface representing a geo-map representing a geographical area including the particular geographical location or geo-area where the spatial recording was made. As such, the spatial note related to the spatial recording can be stored at a location in the 2D user interface that corresponds to the particular location within the other external environment (geographical location or virtual location within a computer-simulated environment) where the spatial recording was made. During viewing of the hybrid environment and portions of the 2D environment representing the geo-map, a user can interact with the spatial note to request to view a playback of the spatial recording or other data associated with that spatial note. The playback for the user can be generated from a viewpoint defined based on the position and orientation of the user within the 2D environment as mapped to a corresponding position and orientation of the user in the other environment (e.g., real-world) where the spatial recording was made. In some instances, the user can request to be provided with a first-person view of the recording so that the user can be teleported at the position of the spatial node in the 2D environment. Various types of implementations of such teleportation can be provided to be used with the presently disclosed subject matter so that the position of the avatar is moved to another position, such as described in U.S. Application No. 18/506,974 filed on November 10, 2023, and titled "Shared 3D perspective viewing of an asset in an extended reality system", which application is hereby incorporated by reference in its entirety.

When the user is teleported, the playback can be generated from the perspective of the user who recorded the spatial recording. In some instances, the playback of the spatial recording, presented in third-person view mode or first-person view mode, can be rendered at a 3D environment that can be a virtual environment rendered at another device, e.g., a 3D monitor or a 3D headset.

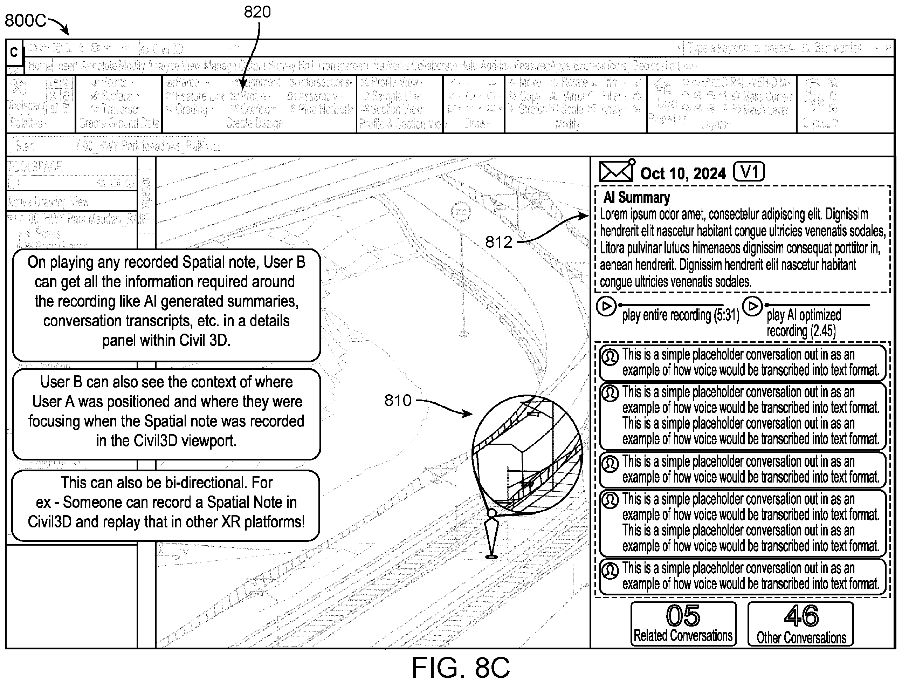

Thus, as illustrated in FIG. 5C, the playback corresponds to a view of what may be viewed by the user in the XR environment who requested to view the spatial recording, e.g., the user mentioned with reference to FIG. 6 (and not a view of what may be viewed by a user in the XR environment who generated the spatial recording, e.g., the user mentioned with reference to FIG. 4). And as illustrated in FIG. 8C, the playback 810 corresponds to a view of what was viewed by the user who recorded the spatial recording.

In some implementations, the playback is generated by the playback engine (such as the playback engine 220 of FIG. 2) in a first-person view mode. That is, while rendering a user's view of another user who generated the spatial recording into the computer-generated simulated environment to the output device for presentation, the user device provides the playback for presentation to the user. The playback is generated by the playback engine based on the spatial recording from a perspective of the other user in the computer-generated simulated environment at the pose (position and orientation) of the avatar of the other user in the computer-generated simulated environment when they generated the spatial recording.

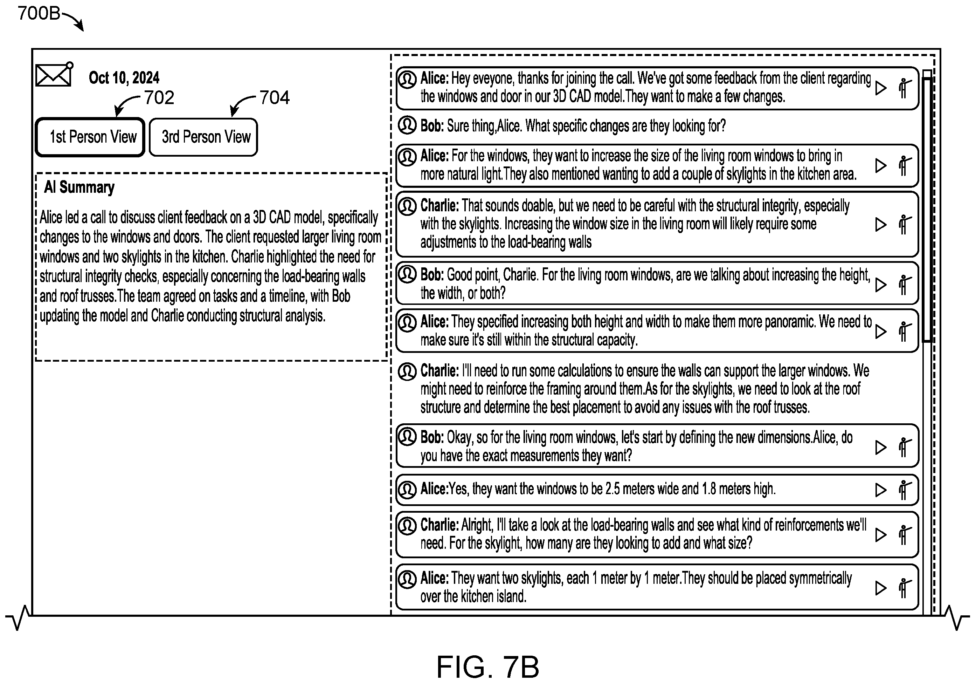

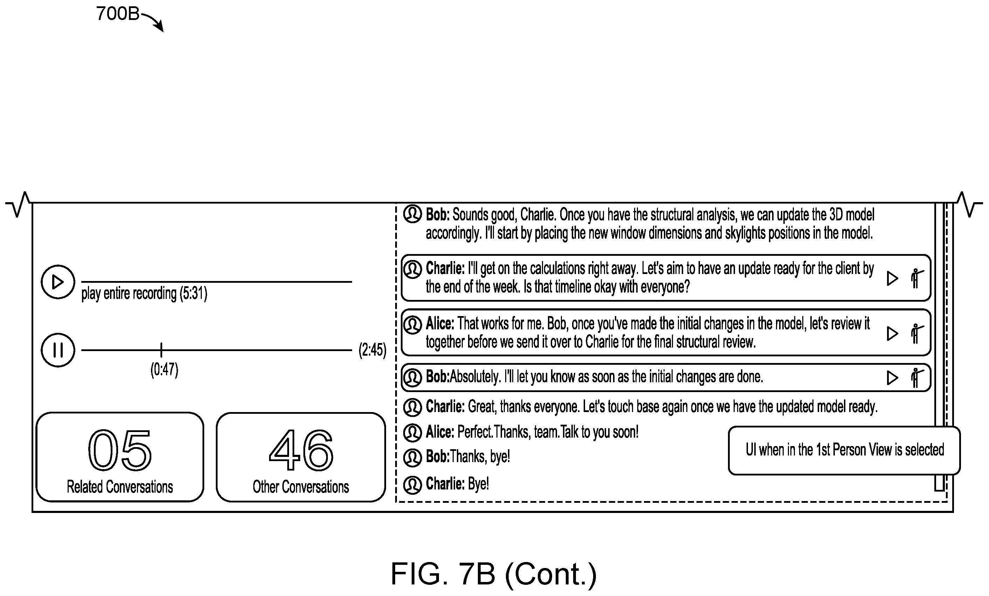

FIG. 7A shows another example user interface 700A provided for display to a user accessing an XR environment to present a playback in a first-person view mode in accordance with implementations of the present disclosure. As illustrated in FIG. 7A, the playback corresponds to a view of what may be viewed by another user in the XR environment who generated the spatial recording, e.g., the user mentioned with reference to FIG. 4 (and not a view of what may be viewed by a user in the XR environment who requested to view the spatial recording, e.g., the user mentioned with reference to FIG. 6). The user, presented with the playback in the user interface 700A of the XR environment, is also presented with another user interface 700B as shown in an enlarged format on FIG. 7B. The user interface 700B can includes textual content related to the generation of the spatial recording and the provided playback within the user interface 700A in a first-person view (a view of the playback from a position from which the spatial recording was generated). The content provided on the user interface 700B as shown on FIG. 7A is the same as the content shown on 700B of FIG. 7B but shown in different size for the sake of the example.

In some implementations, the playback engine can determine whether to generate the playback in a third-person view mode or a first-person view mode in response to a user request. For example, the user device can receive a user input, e.g., from the same user who requested to view the playback, a request that specifies either the third-person view mode or the first-person view mode, and then generate the playback for presentation to the user in accordance with the user request. As another example, after having generated the playback in the third-person view mode for presentation to the user, the user device can receive a request from the user to switch from the third-person view mode to the first-person view mode, and in response, updating the presentation of the playback to the first-person view mode.

FIG. 7B shows another example user interface 700B provided for display to a user accessing an XR environment to present a content associated with a spatial recording in accordance with implementations of the present disclosure. As illustrated in FIG. 7B, the playback is presented within the user interface 700B that is a graphical user interface (a 2D interface) provided by the graphics application. The user interface 700B includes one or more user interface (UI) elements that each represent a different mode of the playback, i.e., a first UI element 702 that represents the first-person view mode and a second UI element 704 that represents the third-person view mode.

In the example of FIG. 7B, the user interface 700B includes "point-and-click"-style user interface elements that rely on input from a pointer (e.g., the VR/AR controller) or another input device (e.g., a mouse) to manipulate or interact with interface elements. In another example, the user interface can include "gaze-and-click"-style user interface elements that rely on user gaze at an on-screen location corresponding to the user interface element to manipulate or interact with interface elements. In another example, the user interface can include voice activation user interface elements that rely on voice command inputs from the user to manipulate or interact with interface elements.

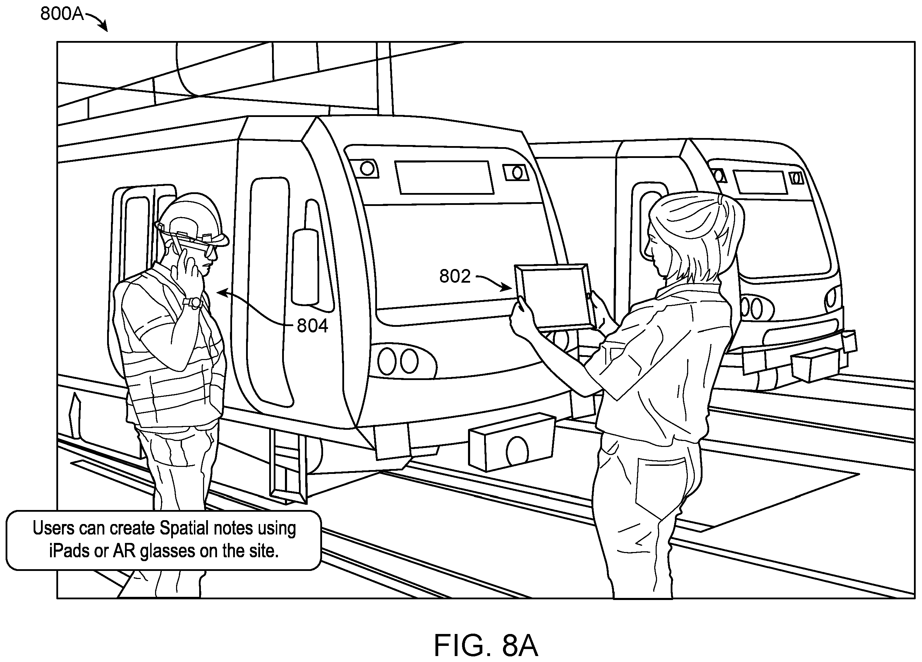

FIG. 8A shows an example of a hybrid environment 800A in accordance with implementations of the present disclosure. As an example of the computer-generated simulated environment, the hybrid environment 800A is an interconnected combination of one or more of environments that can be of one or more of the following types: a VR environment, an AR environment, an XR environment, a desktop environment, a web preview environment, a native user interface application environment, among other example environments. The different interconnected environments into the hybrid environment 800A can be supported by different types of devices and corresponding interactive user input devices that a user can use to interact with the environment.

In the example of FIG. 8A, spatial recordings can be generated in the hybrid environment 800A by one or more users by using one or more instance of the graphics application 116 of FIG. 1 that run on different devices, e.g., an instance of the graphics application 116 that run on a computer (a tablet computer 802 in this example) and another instance of the graphics application 116 that run on a XR user device (an AR headset 804 in this example). In some instances, the spatial recordings can be generated through an instance of the graphics application 116 of FIG. 1 at another environment, such as a real-world environment or another VR environment, but stored (at particular locations) in the hybrid environment 800A to be accessible for users while rendering scenes within the hybrid environment 800A.

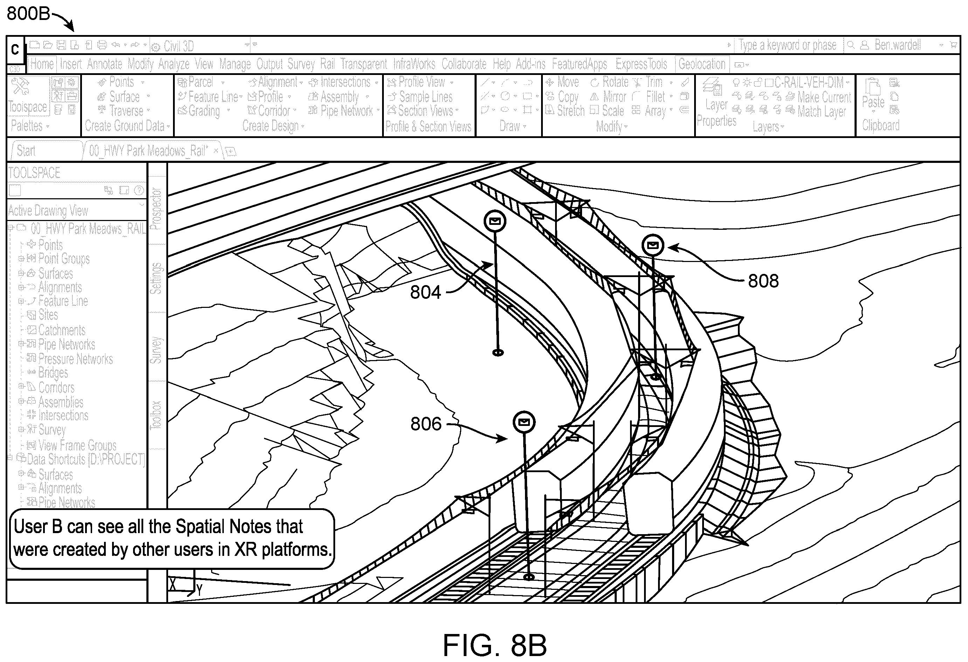

FIG. 8B shows an example user interface 800B provided for display to a user accessing the hybrid environment 800A of FIG. 8A to present a playback in accordance with implementations of the present disclosure. The user interface 800B is a 2D interface that presents 2D content that includes a 2D scene, which is a particular view of the hybrid environment 800A of FIG. 8A that a user can have when looking at the hybrid environment 800A on a 2D display, e.g., on a display device of a desktop computer or a tablet computer (e.g., tablet computer 802 of FIG. 8A). The 2D scene can be geo-map that corresponds to a physical real-world area.

In the example of FIG. 8B, the user interface 800B includes three "point-and-click"-style user interface elements 804, 806, 808 (illustrated as spatial notes). Each user interface element 804, 806, 808 relies on input from a pointer (e.g., the VR/AR controller) or another input device (e.g., a mouse or touch screen) to manipulate or interact with user interface element.

The user interface elements 804, 806, 808 each indicate the existence of a spatial recording that has previously been generated in the hybrid environment 800A by a user or at an external environment (and location thereof) but stored at those locations within the hybrid environment 800B. Interacting with the user interface elements 804, 806, or 808 can trigger rendering of a playback or other data associated with the stored spatial recording that can be performed within the 2D interface or at another environment within the hybrid environment 800A that can be a 2D or 3D environment. In some cases, a playback of a spatial recording can be rendered at a 3D VR environment that is provided on another device, different from the device where the 2D interface is presented.

In some case, when the spatial recordings were generated by instances of the graphics application 116 in the hybrid environment 800A with reference to the poses (positions and orientations) of the avatars of the users in hybrid environment 800A associated with recording the spatial recordings, the user interface elements 804, 806, 808 can indicate the existence of the spatial recordings that are positioned with reference to previous poses (positions and orientations) of the avatars of the users at which those users were when they generated the spatial recordings. In the cases where the spatial recordings are generated in other environments, the positions of the users associated with the spatial recordings in the other environments can be mapped to positions in the hybrid environment 800A so as to extend the experience of the user when viewing the hybrid environment 800A at those particular positions to views from another environment.

FIG. 8C shows another example user interface 800C provided for display to a user accessing the hybrid environment 800A of FIG. 8A to present a playback 820 in accordance with implementations of the present disclosure. The playback 820 can be presented within the user interface 800C and can be generated by the playback engine 220 of FIG. 2 in response to a request to view a spatial recording received from an instance of the graphics application 116 that runs on a desktop computer or a tablet computer (e.g., tablet computer 802 of FIG. 8A). In some instances, the playback

Specifically, the playback 820 is presented within the user interface 800C that is a graphical user interface (a 2D interface) provided by the graphics application 116. The playback 820 includes a presentation of the focal point position (illustrated as the circle 810) of a user when the user generated the spatial recording. The user interface 800C also includes a window 812 that can include several elements similar to those described above with reference to FIG. 5D, e.g., including an AI summary window that presents a summary of the spatial recording, a first command bar for controlling the presentation of the spatial recording, a second command bar for controlling the presentation of a modified version of the spatial recording, and a transcription window that displays the machine transcription of the spatial recording.

Turning back to FIG. 2, as an optional component of the spatial insights system 160, the version management engine 230 includes implemented logic for version tracking. The version management engine 230 is configured to manage the spatial recordings generated across multiple different versions of the computer-generated simulated environment. For example, in implementations, as users work independently or collaborate on a graphics design task, e.g., an interior design or an urban planning task, in a computer-generated simulated environment, the computer-generated simulated environment can under multiple rounds of revisions, e.g., as new objects are added to the environment, existing objects are removed from the environment, and so on.

When included, the version management engine 230 enables a user to select between multiple different versions of the computer-generated simulated environment, and view the spatial recordings generated in the selected version of the computer-generated simulated environment. In particular, the version management engine 230 enables the user to view the playback generated based on the spatial recordings in context of the selected version of the computer-generated simulated environment, which may be different from a current version of the computer-generated simulated environment that is presented to the user.

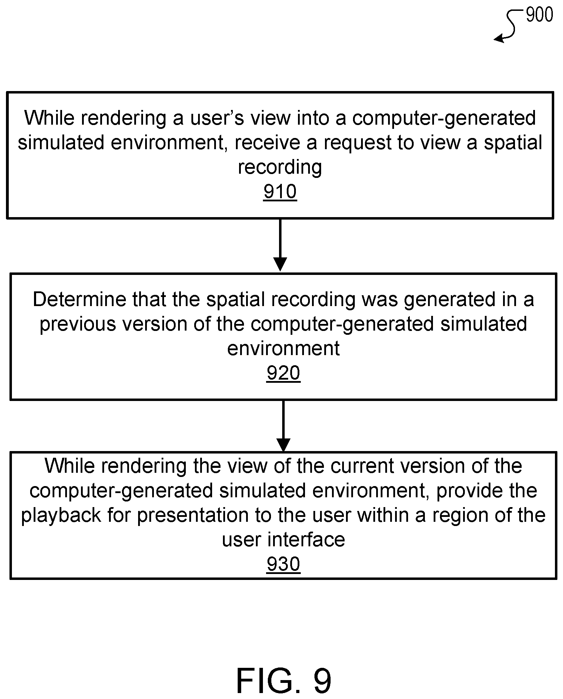

FIG. 9 shows an example of another process 900 to provide a playback that is generated based on the spatial recording for presentation in accordance with implementations of the present disclosure.

At 910, while rendering a user's view into a computer-generated simulated environment is rendered by a graphics application to an output device of a user device, e.g., within a user interface displayed on the output device, for presentation to a user, an interaction with a UI element within the computer-generated simulated environment to request to view a spatial recording is received by an input device of the user device. In particular, the user's view corresponds to a view of a current version of the computer-generated simulated environment.

At 920, the user device determines that the spatial recording was generated in a previous version of the computer-generated simulated environment that is different from the current version of the computer-generated simulated environment that is being viewed by the user at the user's view. Thus, the spatial recording may reference one or more objects that have been removed from or otherwise modified in the current version of the computer-generated simulated environment. For example, the special recording may include an image of an object that has been moved to a different position within the current version of the computer-generated simulated environment. As another example, the special recording may include audio data that includes a recording of a user discussing an obsolete object that no longer exists within the current version of the computer-generated simulated environment.

FIG. 10A shows another example user interface 1000A provided for display to a user accessing an XR environment to present a playback in accordance with implementations of the present disclosure. In the example of FIG. 10A, the playback is presented within a graphical user interface (a 2D interface) 1000A. The graphical user interface 1000A includes a version compare window 1010 that enables one or more version management operations by the user, such as selecting between one or more versions of the XR environment, e.g., V1 (the oldest version, also the version in which the spatial recording was generated), V2, V3, and V4 (the newest version).

At 930, while rendering the view of the current version of the computer-generated simulated environment, the user device provides the playback for presentation to the user within a region of the user interface. The region of the user interface corresponds to a portion of the previous version of the computer-generated simulated environment within which the spatial recording was generated. In the example of FIG. 10A, suppose that the current version is V2, while rendering V2 for presentation, the user device can provide the playback for presentation to the user within a region of the user interface that corresponds to a portion of V1. Thus, the user is provided with access to information contained within different versions of the computer-generated simulated environment, for example, within both V1 and V2.

In some implementations, to highlight that the spatial recording was generated in a different version of the computer-generated simulated environment, the region of the user interface is rendered for presentation to the output device using one or more display attributes that are different from one or more display attributes associated with rendering the view of the current version of the computer-generated simulated environment.

FIG. 10B shows another example user interface provided for display to a user accessing an XR environment to present a playback in accordance with implementations of the present disclosure. In the example of FIG. 10B, the region of the user interface (a snippet 1002) is rendered using one or more of different lighting, shading, or texturing attributes than the view of the current version of the XR environment. This minimizes user confusion that might otherwise be caused by the different versions of the environment, and enables the user to quickly understand the content of the spatial recording. The user, presented with the playback in the snippet 1002 is also presented with another user interface 1000A as shown in an enlarged format on FIG. 10A. The user interface 1000A can includes textual content related to the generation of the spatial recording and the provided playback within the user interface 1004. The content provided on the user interface 1000A as shown on FIG. 10A is the same as the content shown on the down left side of FIG. 10B (annotated with 1000A as well) but shown in different size for the sake of the example.

In some of these implementations, the region of the user interface includes a visual representation that serves as a portal to the previous version of the environment at which the recording was made. In some cases, the previous version may correspond to a previous state of the environment at which the recording was made, where the previous state may or may not be the same as a current state (or version) of the environment. The visual representation included in the region is generated based on a previously stored spatial recording to be presented from the perspective of the user in the computer-generated simulated environment at the position (which may be different from the perspective of a user who recorded the spatial recording at the previous version or state of the environment). For example, the visual representation may be a video or other 3D model representation with motion. The virtual representation may be presented to the user through the device from which it the user had navigated within the computer-generated simulated environment or at another device, such as a VR device (e.g., headset). For example, in FIG. 10B, the snippet 1002 of the previous version of the environment (illustrated as a circle with less amount of darkness) is overlaid onto the view 1004 of the current version of the XR environment (illustrated as the background with greater amount of darkness that is partially covered by the circle).

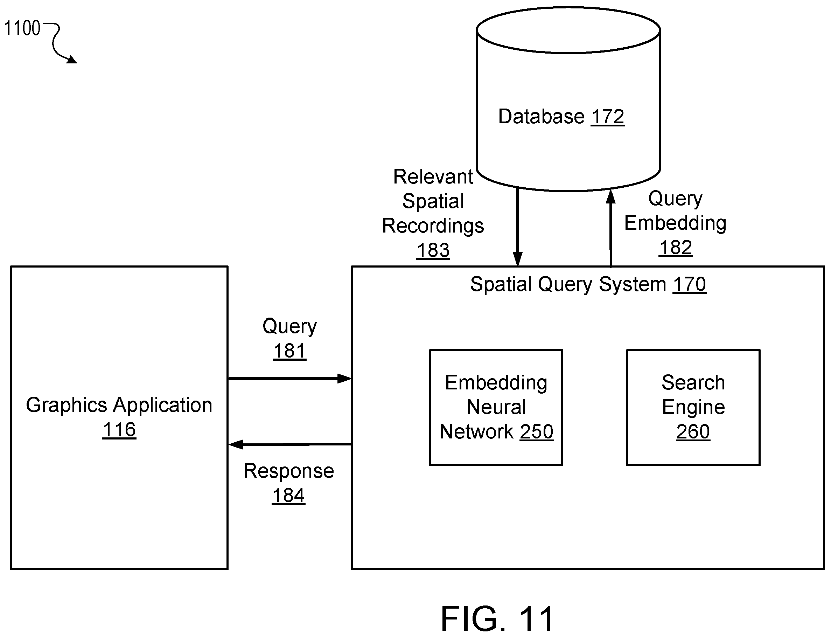

FIG. 11 is a system diagram 1100 of the graphics application 116 configured to interact with a spatial query system 170 in accordance with implementations of the present disclosure. The spatial query system 170 is configured to communicate with a database 172 that stores a plurality of spatial recordings that have been generated in a computer-generated simulated environment by one or more users using one or more instances of the graphics application 116 that run on one or more user devices.

For each of the plurality of spatial recordings, the database 172 stores additional data that is generated by the AI system based on the spatial recording. For example, for each spatial recording, the additional data stored in association with the spatial recording can include one of more of: the machine transcription of the spatial recording, the machine translation of the spatial recording, the summary of the spatial recording, the modified version of the spatial recording, or the keyword data of the spatial recording.

In cases where the computer-generated simulated environment is a large-scale environment used in a complex graphics design task, e.g., a complex interior design or a complex urban planning task, that involves a very large number of users, there can be a very large number of spatial recordings stored in the database 172. The spatial querying services provided by the spatial query system 170 are particularly important in these cases because they provide quick and easy access to vast amounts of information, facilitate informed decision-making, and enhance user experience by enabling users to quickly find what they need.

To provide the spatial querying services, the spatial query system 170 includes an embedding neural network 250 and a search engine 260. In operation, the spatial query system 170 receives query data representing a query 181 and uses the embedding neural network 250 and the search engine 260 to generate a response 184 to the query 181. The spatial query system 170 can obtain data representing the query 181 in any of a variety of ways.

In some implementations, the query data includes text data, and the spatial query system 170 receives the query data as a text query from a user, e.g., the user 190 of FIG. 1, submitted through a user interface, e.g., the user interface 132 that is provided by the graphics application 116, of a user device, e.g., the computer 110 or the XR user device 180. For example, the query data may be entered by the user by typing using an input device, e.g., the input device 118 of FIG. 1, which can be a keyboard, a touch screen, a wearable device (such as a smartwatch), a VR/AR controller, a VR/AR input glove, and/or a VR/AR headset, or another handheld or desktop input device.

In some other implementations, the query data includes audio data, and the spatial query system 170 receives the query data as a natural language speech query from the user and converts the speech into the query 181 by applying a speech recognition engine to the speech. For example, the query data may be received in the form of a sound (speech) signal, captured by a microphone of by a user device, converted by a speech recognition engine, i.e., a speech-to-text converter to form the query 181, which is then provided by the user device to the spatial query system 170.

The embedding neural network 250 is configured to process the query 181 to generate a query embedding 182. An "embedding" as used in this specification is a vector of numeric values, e.g., floating point values or other values, having a pre-determined dimensionality. The space of possible vectors having the pre-determined dimensionality is referred to as the "embedding space."

The embedding neural network 250 can have any appropriate neural network architecture that enables it to perform its described function, e.g., processing user query to generate a query embedding. For example, the embedding neural network 250 can include any appropriate types of neural network layers (e.g., fully-connected layers, convolutional layers, attention layers, etc.) in any appropriate numbers (e.g., 5 layers, 25 layers, or 100 layers) and connected in any appropriate configuration (e.g., as a linear sequence of layers).

The search engine 260 includes implemented logic that is configured to search through the database 172 that stores a plurality of spatial recordings to obtain a set of spatial recordings 183 from the database 172 that are relevant to the query 181 based on performing a k-nearest neighbor (kNN) search computation.

To perform the kNN search computation, the search engine 260 receives (i) the query embedding 182 and (ii) a plurality of database embeddings, and searches for the k database embeddings that are most similar to the query embedding 182 according to some similarity measure. Specifically, the plurality of database embeddings include a corresponding database embedding for each of the plurality of spatial recordings stored in the database 172.

For each of the plurality of spatial recordings, the corresponding database embedding is generated by using the same embedding neural network 250 that is also used to generate the query embedding 182. Thus, the database embeddings and the query embedding 182 are in the same embedding space, and have the same dimensionality, i.e., have the same number of numeric values.

In some implementations, the embedding neural network 250 can generate the corresponding database embedding for a spatial recording by processing a portion of the spatial recording or the spatial recording in its entirety. In some implementations, the embedding neural network 250 can generate the corresponding database embedding for a spatial recording based on processing data derived from the spatial recording. For example, the embedding neural network 250 can generate the corresponding database embedding based on processing the summary of the special recording, the modified version of the spatial recording, or both, where, e.g., the summary or the modified version is generated by the AI system 240 of FIG. 2.

Unlike the query embedding 182 which is typically generated by the spatial query system 170 on-the-fly, whenever a new query 181 is received, however, the plurality of database embeddings can be pre-generated and reused in different kNN search computations. For example, the spatial query system 170 can process a spatial recording as it is being generated in the computer-generated simulated environment using the embedding neural network 250 to generate a database embedding, and then store the generated query embedding in the database 172 in association with the spatial recording.

For some similarity measures, e.g., Euclidean distance, Manhattan distance, or other distance measures, the most similar database vectors are those that are closest to the query vector (have the smallest similarity measure with the query vector). For some other similarity measures, e.g., inner product or cosine similarity, the most similar database vectors are those that have the largest similarity measure with the query vector. K can generally be any positive integer, i.e., any integer greater than or equal to one, but is generally much smaller than the total number N of database vectors in the set.

The search engine 260 identifies, as the output of the kNN search computation, a set of k database vectors for the query embedding 182. Each database vector in the set corresponds to a spatial recording. In this way, the search engine 260 identifies a set of spatial recordings 183 from the database 172 that are relevant to the query 181. Having obtained the set of relevant spatial recordings 183, the spatial query system 170 then uses the obtained set of relevant spatial recordings 183 to generate a response 184 to the query 181. The response can be generated in any of a variety of ways.

In some implementations, the spatial query system 170 works independently of the spatial insights system 160. In some of these implementations, the spatial query system 170 provides active querying services to a user, e.g., the user 190 of FIG. 1, through an instance of the graphics application 116 that runs on the computer 110 (or the XR user device 180).

For example, the user 190 can provide, as the query 181, a search request by using an input device of the computer 110, and the computer 110 sends the query 181 to the spatial query system 170. For example, the search request can include one or more search terms, e.g., words, keywords, and/or phrases. Then, the spatial query system 170 generates a response 184 that identifies a set of relevant spatial recordings 183 obtained as a result of the kNN search computation for display on an output device of the computer 110, e.g., in a search results page that is displayed on the output device as a response to the search request.

In some of these implementations, the spatial query system 170 provides passive querying services to a user, e.g., the user 190 of FIG. 1, through an instance of the graphics application 116 that runs on the computer 110 (or the XR user device 180). The graphics application 116 can execute as a background process on the computer 110. Executing as one of the background processes, the graphics application 116 can continuously monitor the audio data through a microphone of the computer 110.

Upon acquisition of the audio data from the microphone that includes a vocal instruction that triggers the spatial querying services, the graphics application 116 generates a query 181 that includes one or more search terms included in or otherwise derived from the vocal instruction, and the computer 110 sends the query 181 to the spatial query system 170. Then, the spatial query system 170 generates a response 184 that identifies a set of relevant spatial recordings 183 obtained as a result of the kNN search computation for display on an output device of the computer 110, e.g., in a pop-up window, or a selectable indication of the set of relevant spatial recordings can be provided and, if selected, can cause the set of relevant spatial recordings to be presented..

For example, during a discussion with the one or more other collaborative users, the user 190 could ask a question posed about the computer-generated simulated environment, such as "are there any issues with the ventilation system on the roof of the new office building?" which can be interpreted by the graphics application 116 as a vocal instruction to search for spatial recordings relevant to the search term "ventilation system."

In some implementations, the spatial query system 170 works in tandem with the spatial insights system 160 of FIG. 2. In these implementations, the query 181 can be generated by the graphics application 116 based on the spatial recording that is requested by the user 190 for display. For example, the query 181 can include a summary of the special recording, a modified version of the spatial recording, or both. Then, the response 184 that identifies a set of relevant spatial recordings 183 can be provided by the spatial query system 170 as part of, or in association with, the playback 174 generated by the spatial insights system 160.

For example, as shown in FIG. 5D, the graphical user interface 500D that is configured to present the spatial recording includes a related spatial recordings window 516 and a total spatial recordings window 518. The related spatial recordings window 516 identifies a set of spatial recordings stored in the database 172 that is relevant to the spatial recording. The total spatial recordings window 518 identifies all of the spatial recordings stored in the database 172. In the example of FIG. 5D, the database 172 stores a total of 46 spatial recordings, while only 5 out of the 46 spatial recordings are identified as relevant to the spatial recording.

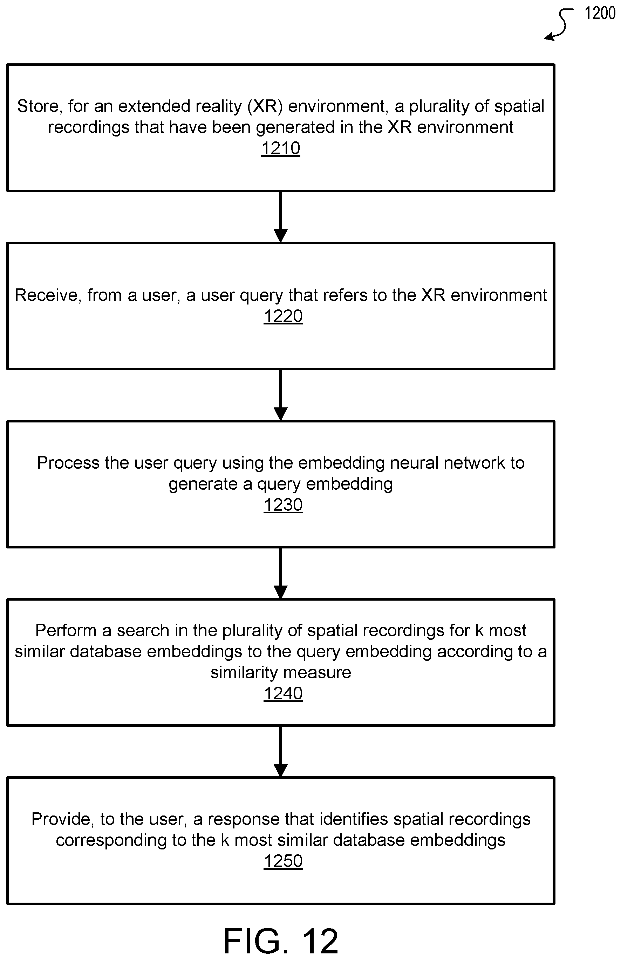

FIG. 12 shows an example of a process 1200 to generate a response for a query in accordance with implementations of the present disclosure. For example, a spatial query system, e.g., the spatial query system 170 of FIG. 11, appropriately programmed in accordance with this specification, can perform the process 1200.

At 1210, a plurality of spatial recordings is stored in a database. The plurality of spatial recordings has been generated in an XR environment. A few examples of how a spatial recording can be generated are discussed above with reference to FIGS. 3A-3D and FIG. 4. For each of the plurality of spatial recordings, the database also stores a corresponding database embedding that is generated by using an embedding neural network by processing the spatial recording or data derived from the spatial recording.

For each of the plurality of spatial recordings, the database stores additional data that is generated by an AI system based on the spatial recording. For example, for each spatial recording, the additional data stored in association with the spatial recording can include one of more of: the machine transcription of the spatial recording, the machine translation of the spatial recording, the summary of the spatial recording, the modified version of the spatial recording, or the keyword data of the spatial recording.

At 1220, a query is received from a user. A few examples of the query, as well as how the query can be received are discussed above with reference to FIG. 11. In general, the user can provide the query by using spoken or written text in a natural language. For example, the query can be provided by the user in the form of a search request that includes one or more search terms, in the form of a vocal instruction that refers to the XR environment, in the form of question posed about the XR environment, and so forth.

At 1230, the query is processed using the embedding neural network to generate a query embedding. Thus, the query embedding and the database embeddings are generated by using the same embedding neural network and have the same dimensionality.

At 1240, a k-nearest neighbor (kNN) search computation is performed by a search engine to search through the database for k most similar database embeddings to the query embedding according to a similarity measure. The similarity measure can be any appropriate similarity measure. Examples of similarity measures include inner product similarity, cosine similarity, Euclidean distance, and Manhattan distance.

In some implementations, the search engine performs the kNN search computation through the entire database. However, given the large number of spatial recordings (and correspondingly, database embeddings) that need to be searched in many complex graphics design tasks, the kNN search can be computationally expensive and, in some cases, can decrease the performance computational efficiency of the spatial query system due to excessive latency, excessive memory usage, and so on.

To alleviate these issues, some implementations of the search engine perform the kNN search computation through only a proper subset of the database to improve the computation efficiency while still maintaining a high degree of accuracy. For example, the proper subset of the plurality of spatial recordings can be identified based on a position of an avatar associated with the user in the XR environment, and the proper subset of the plurality of spatial recordings can include the spatial recordings that have been stored in the XR environment within a vicinity to that position, e.g., within a threshold distance to that position. Then, the kNN search computation is performed by the search engine to search through the spatial recordings in the proper subset for the k most similar database embeddings.

At 1250, a response that identifies spatial recordings corresponding to the k most similar database embeddings is provided to the user. The spatial recordings include a subset of the plurality of spatial recordings stored in the database that are relevant to the query. A few examples of such a response are discussed above with reference to FIG. 11.

In general, the response can include at least a presentation that identifies the relevant spatial recordings, and possibly additional data. For example, for each relevant spatial recording, the additional data can include one of more of: the machine transcription of the relevant spatial recording, the machine translation of the relevant spatial recording, the summary of the relevant spatial recording, or the keyword data of the relevant spatial recording that identifies one or more keywords in the transcription.

As a particular example, when operating in tandem with a spatial insights system, while a graphics application renders a view of a current version of the computer-generated simulated environment (that corresponds to a view of a current version of the computer-generated simulated environment) to an output device of a user device, the user device can receive the query from the user. Then, while rendering the view into the XR environment, the graphics application provides a total of k user interface elements that each correspond to a respective one of the relevant spatial recordings for presentation to the user, e.g., as part of, or in association with, the view into the XR environment.

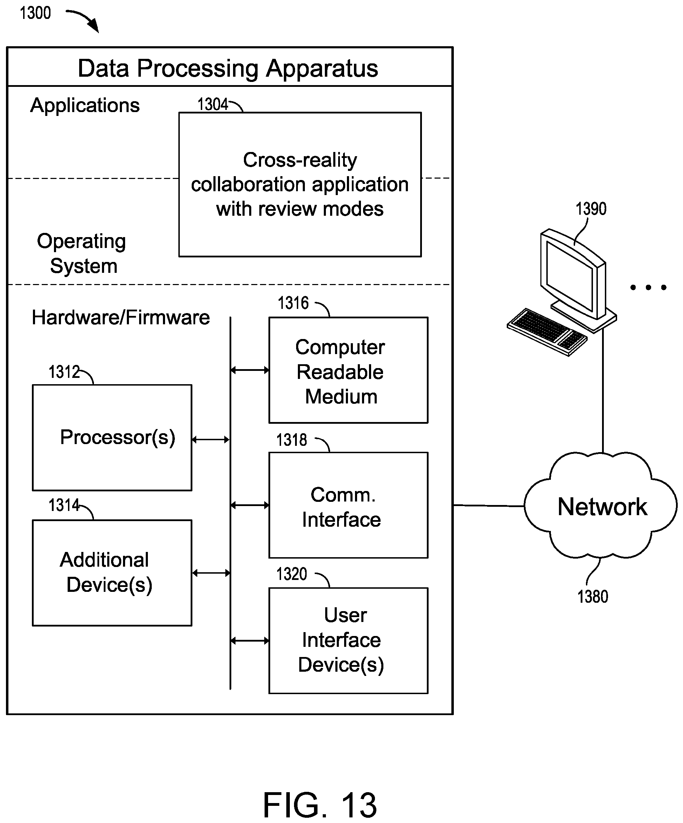

FIG. 13 is a schematic diagram of a data processing system including a data processing apparatus 1300, which can be programmed as a client or as a server. The data processing apparatus 1300 is connected with one or more computers 1390 through a network 1380. While only one computer is shown in FIG. 13 as the data processing apparatus 1300, multiple computers can be used. The data processing apparatus 1300 includes various software modules, which can be distributed between an applications layer and an operating system. These can include executable and/or interpretable software programs or libraries, including the graphics application 116, the spatial insights system 160, and the spatial query system 170 that provide tools and techniques to support generation, search, and display of spatial recording in accordance with implementations of the present application. The number of software modules used can vary from one implementation to another. Moreover, the software modules can be distributed on one or more data processing apparatus connected by one or more computer networks or other suitable communication networks.

The data processing apparatus 1300 also includes hardware or firmware devices including one or more processors 1312, one or more additional devices 1314, a computer readable medium 1316, a communication interface 1318, and one or more user interface devices 1320. Each processor 1312 is capable of processing instructions for execution within the data processing apparatus 1300. In some implementations, the processor 1312 is a single or multi-threaded processor. Each processor 1312 is capable of processing instructions stored on the computer readable medium 1316 or on a storage device such as one of the additional devices 1314. The data processing apparatus 1300 uses the communication interface 1318 to communicate with one or more computers 1390, for example, over the network 1380. Examples of user interface devices 1320 include a display, a camera, a speaker, a microphone, a tactile feedback device, a keyboard, a mouse, and VR and/or AR equipment. The data processing apparatus 1300 can store instructions that implement operations associated with the program(s) described above, for example, on the computer readable medium 1316 or one or more additional devices 1314, for example, one or more of a hard disk device, an optical disk device, a tape device, and a solid- state memory device.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented using one or more modules of computer program instructions encoded on a non-transitory computer-readable medium for execution by, or to control the operation of, data processing apparatus. The computer-readable medium can be a manufactured product, such as a hard drive in a computer system or an optical disc sold through retail channels, or an embedded system. The computer-readable medium can be acquired separately and later encoded with the one or more modules of computer program instructions, e.g., after delivery of the one or more modules of computer program instructions over a wired or wireless network. The computer-readable medium can be a machine-readable storage device, a machine-readable storage substrate, a memory device, or a combination of one or more of them.

The term "data processing apparatus" encompasses all apparatus, devices, and machines for processing data, including by way of example a programmable processor, a computer, or multiple processors or computers. The apparatus can include, in addition to hardware, code that produces an execution environment for the computer program in question, e.g., code that constitutes processor firmware, a protocol stack, a database management system, an operating system, a runtime environment, or a combination of one or more of them. In addition, the apparatus can employ various different computing model infrastructures, such as web services, distributed computing, and grid computing infrastructures.

A computer program (also known as a program, software, software application, script, or code) can be written in any suitable form of programming language, including compiled or interpreted languages, declarative or procedural languages, and it can be deployed in any suitable form, including as a stand-alone program or as a module, component, subroutine, or other units suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors, executing one or more computer programs to perform functions by operating on input data and generating output. The processes and logic flows can also be performed by, and apparatus can also be implemented as, special purpose logic circuitry, e.g., a field programmable gate array (FPGA) or an application-specific integrated circuit (ASIC).

Processors suitable for the execution of a computer program include, by way of example, both general and special purpose microprocessors, and any one or more processors of any kind of digital computer. Generally, a processor will receive instructions and data from a read-only memory or a random-access memory, or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media, and memory devices, including by way of example semiconductor memory devices, e.g., EPROM (Erasable Programmable Read-Only Memory), EEPROM (Electrically Erasable Programmable Read-Only Memory), and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a liquid crystal display (LCD) device, an organic light emitting diode (OLED) display device, or another monitor, for displaying information to the user, and a keyboard and a pointing device, e.g., a mouse or a trackball, by which the user can provide input to the computer. Other kinds of devices can be used to provide for interaction with a user as well; for example, feedback provided to the user can be any suitable form of sensory feedback, e.g., visual feedback, auditory feedback, or tactile feedback; and input from the user can be received in any suitable form, including acoustic, speech, or tactile input.

The computing system can include clients and servers. A client and server are generally remote from each other, and typically interact through a communication network. The relationship of client and server arises by virtue of computer programs running on the respective computers and having a client-server relationship to each other. Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a browser user interface, through which a user can interact with an implementation of the subject matter described in this specification, or any combination of one or more such back-end, middleware, or front-end components. The components of the system can be interconnected by any suitable form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many implementation details, these should not be construed as limitations on the scope of what is being or may be claimed, but rather as descriptions of features specific to particular embodiments of the disclosed subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the invention have been described. Other embodiments are within the scope of the following claims. In addition, actions recited in the claims can be performed in a different order and still achieve desirable results.

### Examples

Although the present application is defined in the attached claims, it should be understood that the present invention can also (additionally or alternatively) be defined in accordance with the following examples:
Example 1. A computer-implemented method comprising:
   rendering, to a first device of a first user, a first user's view into an environment, the first user's view being generated in accordance with a first position and a first orientation of an avatar associated with the first user in the environment, wherein the first user's view into the environment comprises a user interface element positioned at a second position in the environment to indicate that a spatial recording has been stored in the environment, and wherein the spatial recording is recorded from the second position in the environment;
   receiving, by the first device of the first user, an interaction with the user interface element within the environment to request to view the spatial recording; and
   in response to receiving the request to view the spatial recording, providing a playback for presentation to the first user, wherein the playback is generated based on the spatial recording from a perspective of the first user in the environment at the first position and with the first orientation.
Example 2. The method of Example 1, wherein the spatial recording is generated by:
   rendering, to a second device of a second user, a second user's view into the environment, the second user's view being generated in accordance with the second position and a second orientation of an avatar of the second user in the environment;
   receiving, by the second device of the second user, a request to generate the spatial recording in the environment; and
   in response to the received request, generating, by the second device of the second user, the spatial recording in the environment with reference to the second position of the second user in the environment.
Example 3. The method of Example 2, wherein the first device, the second device, or both are an extended reality (XR) device.
Example 4. The method of Examples 2 or 3, wherein the spatial recording comprises position data characterizing a position of a focal point of the second user in the environment.
Example 5. The method of any one of the preceding Examples, wherein the spatial recording comprises data in a single modality.
Example 6. The method of any one of the preceding Examples, wherein the spatial recording comprises data in a plurality of modalities, the plurality of modalities comprising two or more of: a text modality, an audio modality, an image modality, or a video modality.
Example 7. The method of any one of the preceding Examples, wherein the spatial recording comprises data characterizing interactions between a second user and the environment.
Example 8. The method of any one of the preceding Examples, wherein the spatial recording comprises data characterizing interactions between a second user and at least another user in the environment.
Example 9. The method of any one of the preceding Examples, wherein the spatial recording comprises spatial measurements captured in the environment.
Example 10. The method of any one of the preceding Examples, wherein the playback is provided for presentation to the first user while rendering the first user's view into the environment to the first device of the first user.
Example 11. The method of any one of the preceding Examples, wherein providing the playback for presentation to the first user comprises:
   providing an avatar of a second user for presentation into the first user's view into the environment, the avatar being presented at the second position in the environment, wherein the spatial recording was recorded by the second user when the second user was at the second position in the environment.
Example 12. The method of any one of the preceding Examples, wherein the playback comprises a summary of the spatial recording that is generated by a neural network from processing the spatial recording.
Example 13. The method of any one of the preceding Examples, comprising:
   receiving, by the first device of the first user, a request to switch from a third-person view mode to a first-person view mode for providing the playback to the first user, wherein the playback is generated based on the spatial recording from the perspective of the first user in the environment at the first position and with the first orientation;
   in response, rendering, to the first device of the first user, a second user's view into the environment, the second user's view being generated in accordance with the second position of a second user in the environment, wherein the spatial recording was recorded by the second user when the second user was at the second position in the environment; and
   providing, by the first device of the first user, another playback for presentation to the first user, wherein the other playback is generated based on the spatial recording from a perspective of the second user in the environment at the second position.
Example 14. The method of any one of the preceding Examples, wherein providing the playback for presentation to the first user comprises:
   determining that the spatial recording was generated in a previous version of the environment that is different from a current version of the environment that is being viewed by the first user at the first user's view within a user interface displayed on the first device of the first user; and
   while rendering the view of the current version of the environment, providing, by the first device of the first user, the playback for presentation to the first user within a region of the user interface, wherein the region of the user interface corresponds to a portion of the previous version of the environment within which the spatial recording was generated.
Example 15. The method of Example 14, wherein the region of the user interface is rendered for presentation to the first user using one or more display attributes that are different from one or more display attributes associated with rendering the view of the current version of the environment.
Example 16. The method of Example 14, wherein the region of the user interface comprises a snippet of the previous version of the environment from the perspective of the first user in the environment at the first position.
Example 17. The method of Example 1, wherein the environment is one of:
   an XR environment,
   a three-dimensional (3D) model,
   a two-dimensional (2D) or three-dimensional (3D) data file, or
   a coordinate plane.
Example 18. A computer-implemented method comprising:
   storing, for an extended reality (XR) environment, a plurality of spatial recordings that have been generated in the XR environment and, for each of the plurality of spatial recordings, a corresponding database embedding that is generated by using an embedding neural network;
   receiving, from a user, a user query that refers to the XR environment;
   processing the user query using the embedding neural network to generate a query embedding;
   performing a search in the plurality of spatial recordings for k most similar database embeddings to the query embedding according to a similarity measure; and
   providing, to the user, a response that identifies spatial recordings corresponding to the k most similar database embeddings.
Example 19. The method of Example 18, wherein the user query comprises a question posed about the XR environment.
Example 20. The method of Examples 18 or 19, wherein the response comprises, for each of the identified spatial recordings, a summary of the respective spatial recording that is generated by a summarization neural network based on processing the spatial recording.
Example 21. The method of any one of Examples 18 to 20, wherein the spatial recording comprises data in a plurality of modalities, the plurality of modalities comprising two or more of: a text modality, an audio modality, an image modality, or a video modality.
Example 22. The method of any one of Examples 18 to 21, wherein the response comprises, for each of the identified spatial recordings, a transcription of data included in the spatial recording that is in the audio or video modality.
Example 23. The method of Example 22, wherein the response identifies, for each of the identified spatial recordings, one or more keywords in the transcription, wherein the one or more keywords comprise one or more words among a plurality of words in the transcript that have importance scores that satisfy some predetermined importance criteria.
Example 24. The method of Example 23, wherein an importance score for each of the plurality of words in the transcription is computed based on one or more of:
   a confidence score of the word,
   an information density score of the word, or
   a speech content probability score of the word.
Example 25. The method of any one of Examples 18 to 24, wherein the corresponding database embedding for each of the plurality of spatial recordings is generated by processing the summary of the spatial recording using the embedding neural network.
Example 26. The method of any one of Examples 18 to 25, wherein:
   receiving the user query comprises receiving the user query while rendering, to a device of the user, a view into the XR environment; and
   providing, to the user, the response that identifies spatial recordings comprises, while rendering the view into the XR environment, providing k user interface elements that each correspond to a respective one of the identified spatial recordings.
Example 27. The method of any one of Examples 18 to 26, wherein performing the search in the plurality of spatial recordings for the k most similar database embeddings comprises:
   identifying, based on a position of an avatar associated with the user in the environment, a proper subset of the plurality of spatial recordings that have been stored within a vicinity to the position; and
   performing the search in the proper subset of the plurality of spatial recordings for the k most similar database embeddings to the query embedding according to the similarity measure.
Example 28. A computer-implemented method comprising:
   rendering, to a first device of a first user, a first user's view into an environment at a user interface of the first device, the first user's view being generated in accordance with a first position and a first orientation of an avatar associated with the first user in the environment, wherein the user interface comprises a user interface element (e.g., spatial note) positioned at a second position of the environment that is part of the first user's view so to indicate that a spatial recording has been stored in the environment, and wherein the spatial recording is recorded from the second position in the environment;
   receiving, by the first device of the first user, an interaction with the user interface element to request to view the spatial recording;
   in response to receiving the request to view the spatial recording, providing a playback for presentation to the first user, wherein the playback is generated based on the spatial recording from a perspective of the avatar of the first user in the environment at the first position and with the first orientation;
   receiving, from the first device of the first user, a user query that refers to the environment;
   processing the user query using an embedding neural network to generate a query embedding;
   performing a search in a plurality of spatial recordings, the plurality of spatial recordings having been generated in the environment, for identifying k most similar database embeddings to the query embedding according to a similarity measure;
   providing, to the first device of the first user, one or more user interface elements within the user interface of the first device that each identify a relevant spatial recording corresponding to a respective one of the k most similar database embeddings;
   receiving, by the first device of the first user, an interaction with one of the user interface elements; and
   in response to receiving the interaction, providing a follow up playback for presentation to the first user, wherein the follow up playback is generated based on the relevant spatial recording corresponding to the one of the user interface elements from the perspective of the first user in the environment at the first position and with the first orientation.
Example 29. The method of Example 28, wherein the spatial recording is generated by:
   rendering, to a second device of a second user, a second user's view into the environment, the second user's view being generated in accordance with the second position and a second orientation of an avatar of the second user in the environment;
   receiving, by the second device of the second user, a request to generate the spatial recording in the environment; and
   in response to the received request, generating, by the second device of the second user, the spatial recording in the environment with reference to the second position of the second user in the environment.
Example 30. The method of Examples 28 or 29, wherein the first device, the second device, or both are an extended reality (XR) device.
Example 31. The method of any one of Examples 28 to 30, wherein performing the search in the plurality of spatial recordings for the k most similar database embeddings comprises:
   identifying, based on a position of an avatar associated with the user in the environment, a proper subset of the plurality of spatial recordings that have been stored within a vicinity to the position; and
   performing the search in the proper subset of the plurality of spatial recordings for the k most similar database embeddings to the query embedding according to the similarity measure.
Example 32. A system comprising:
   a non-transitory storage medium having instructions of a three-dimensional modeling program stored thereon; and
   one or more data processing apparatus configured to run the instructions of the three-dimensional modeling program to perform operations according to any of method Examples 1-31.
Example 33. A non-transitory computer-readable medium encoding instructions operable to cause data processing apparatus to perform operations according to any of method Examples 1-31.

## Claims

1. A computer-implemented method comprising:
rendering, to a first device of a first user, a first user's view into an environment, the first user's view being generated in accordance with a first position and a first orientation of an avatar associated with the first user in the environment, wherein the first user's view into the environment comprises a user interface element positioned at a second position in the environment to indicate that a spatial recording has been stored in the environment, and wherein the spatial recording is recorded from the second position in the environment;
receiving, by the first device of the first user, an interaction with the user interface element within the environment to request to view the spatial recording; and
in response to receiving the request to view the spatial recording, providing a playback for presentation to the first user, wherein the playback is generated based on the spatial recording from a perspective of the first user in the environment at the first position and with the first orientation.

2. The method of claim 1, wherein the spatial recording is generated by:
rendering, to a second device of a second user, a second user's view into the environment, the second user's view being generated in accordance with the second position and a second orientation of an avatar of the second user in the environment;
receiving, by the second device of the second user, a request to generate the spatial recording in the environment; and
in response to the received request, generating, by the second device of the second user, the spatial recording in the environment with reference to the second position of the second user in the environment, optionally wherein the first device, the second device, or both are an extended reality (XR) device.

3. The method of claim 2, wherein the spatial recording comprises position data characterizing a position of a focal point of the second user in the environment.

4. The method of any one of the preceding claims, wherein the spatial recording comprises data is in a single modality, or wherein the spatial recording comprises data is in a plurality of modalities, the plurality of modalities comprising two or more of: a text modality, an audio modality, an image modality, or a video modality.

5. The method of any one of the preceding claims, wherein the spatial recording comprises data characterizing interactions between a second user and the environment, or wherein the spatial recording comprises data characterizing interactions between a second user and at least another user in the environment.

6. The method of any one of the preceding claims, wherein the spatial recording comprises spatial measurements captured in the environment.

7. The method of any one of the preceding claims, wherein the playback is provided for presentation to the first user while rendering the first user's view into the environment to the first device of the first user.

8. The method of any one of the preceding claims, wherein providing the playback for presentation to the first user comprises:
providing an avatar of a second user for presentation into the first user's view into the environment, the avatar being presented at the second position in the environment, wherein the spatial recording was recorded by the second user when the second user was at the second position in the environment.

9. The method of any one of the preceding claims, wherein the playback comprises a summary of the spatial recording that is generated by a neural network from processing the spatial recording.

10. The method of any one of the preceding claims, comprising:
receiving, by the first device of the first user, a request to switch from a third-person view mode to a first-person view mode for providing the playback to the first user, wherein the playback is generated based on the spatial recording from the perspective of the first user in the environment at the first position and with the first orientation;
in response, rendering, to the first device of the first user, a second user's view into the environment, the second user's view being generated in accordance with the second position of a second user in the environment, wherein the spatial recording was recorded by the second user when the second user was at the second position in the environment; and
providing, by the first device of the first user, another playback for presentation to the first user, wherein the other playback is generated based on the spatial recording from a perspective of the second user in the environment at the second position.

11. The method of any one of the preceding claims, wherein providing the playback for presentation to the first user comprises:
determining that the spatial recording was generated in a previous version of the environment that is different from a current version of the environment that is being viewed by the first user at the first user's view within a user interface displayed on the first device of the first user; and
while rendering the view of the current version of the environment, providing, by the first device of the first user, the playback for presentation to the first user within a region of the user interface, wherein the region of the user interface corresponds to a portion of the previous version of the environment within which the spatial recording was generated, optionally wherein the region of the user interface is rendered for presentation to the first user using one or more display attributes that are different from one or more display attributes associated with rendering the view of the current version of the environment.

12. The method of claim 11, wherein the region of the user interface comprises a snippet of the previous version of the environment from the perspective of the first user in the environment at the first position.

13. The method of claim 1, wherein the environment is one of:
an XR environment,
a three-dimensional (3D) model,
a two-dimensional (2D) or three-dimensional (3D) data file, or
a coordinate plane.

14. A computer-implemented method comprising:
storing, for an extended reality (XR) environment, a plurality of spatial recordings that have been generated in the XR environment and, for each of the plurality of spatial recordings, a corresponding database embedding that is generated by using an embedding neural network;
receiving, from a user, a user query that refers to the XR environment;
processing the user query using the embedding neural network to generate a query embedding;
performing a search in the plurality of spatial recordings for k most similar database embeddings to the query embedding according to a similarity measure; and
providing, to the user, a response that identifies spatial recordings corresponding to the k most similar database embeddings.

15. The method of claim 14, wherein the user query comprises a question posed about the XR environment.

16. The method of claims 14 or 15, wherein the response comprises, for each of the identified spatial recordings, a summary of the respective spatial recording that is generated by a summarization neural network based on processing the spatial recording.

17. The method of any one of claims 14 to 16, wherein the spatial recording comprises data in a plurality of modalities, the plurality of modalities comprising two or more of: a text modality, an audio modality, an image modality, or a video modality.

18. The method of any one of claims 14 to 17, wherein the response comprises, for each of the identified spatial recordings, a transcription of data included in the spatial recording that is in the audio or video modality, optionally wherein the response identifies, for each of the identified spatial recordings, one or more keywords in the transcription, wherein the one or more keywords comprise one or more words among a plurality of words in the transcript that have importance scores that satisfy some predetermined importance criteria, optionally wherein an importance score for each of the plurality of words in the transcription is computed based on one or more of:
a confidence score of the word,
an information density score of the word, or
a speech content probability score of the word.

19. The method of any one of claims 14 to 18, wherein the corresponding database embedding for each of the plurality of spatial recordings is generated by processing the summary of the spatial recording using the embedding neural network.

20. The method of any one of claims 14 to 19, wherein:
receiving the user query comprises receiving the user query while rendering, to a device of the user, a view into the XR environment; and
providing, to the user, the response that identifies spatial recordings comprises, while rendering the view into the XR environment, providing k user interface elements that each correspond to a respective one of the identified spatial recordings.

21. The method of any one of claims 14 to 20, wherein performing the search in the plurality of spatial recordings for the k most similar database embeddings comprises:
identifying, based on a position of an avatar associated with the user in the environment, a proper subset of the plurality of spatial recordings that have been stored within a vicinity to the position; and
performing the search in the proper subset of the plurality of spatial recordings for the k most similar database embeddings to the query embedding according to the similarity measure.

22. A computer-implemented method comprising:
rendering, to a first device of a first user, a first user's view into an environment at a user interface of the first device, the first user's view being generated in accordance with a first position and a first orientation of an avatar associated with the first user in the environment, wherein the user interface comprises a user interface element positioned at a second position of the environment that is part of the first user's view so to indicate that a spatial recording has been stored in the environment, and wherein the spatial recording is recorded from the second position in the environment;
receiving, by the first device of the first user, an interaction with the user interface element to request to view the spatial recording;
in response to receiving the request to view the spatial recording, providing a playback for presentation to the first user, wherein the playback is generated based on the spatial recording from a perspective of the avatar of the first user in the environment at the first position and with the first orientation;
receiving, from the first device of the first user, a user query that refers to the environment;
processing the user query using an embedding neural network to generate a query embedding;
performing a search in a plurality of spatial recordings, the plurality of spatial recordings having been generated in the environment, for identifying k most similar database embeddings to the query embedding according to a similarity measure;
providing, to the first device of the first user, one or more user interface elements within the user interface of the first device that each identify a relevant spatial recording corresponding to a respective one of the k most similar database embeddings;
receiving, by the first device of the first user, an interaction with one of the user interface elements; and
in response to receiving the interaction, providing a follow up playback for presentation to the first user, wherein the follow up playback is generated based on the relevant spatial recording corresponding to the one of the user interface elements from the perspective of the first user in the environment at the first position and with the first orientation.

23. The method of claim 22, wherein the spatial recording is generated by:
rendering, to a second device of a second user, a second user's view into the environment, the second user's view being generated in accordance with the second position and a second orientation of an avatar of the second user in the environment;
receiving, by the second device of the second user, a request to generate the spatial recording in the environment; and
in response to the received request, generating, by the second device of the second user, the spatial recording in the environment with reference to the second position of the second user in the environment.

24. The method of claims 22 or 23, wherein the first device, the second device, or both are an extended reality (XR) device.

25. The method of any one of claims 22 to 24, wherein performing the search in the plurality of spatial recordings for the k most similar database embeddings comprises:
identifying, based on a position of an avatar associated with the user in the environment, a proper subset of the plurality of spatial recordings that have been stored within a vicinity to the position; and
performing the search in the proper subset of the plurality of spatial recordings for the k most similar database embeddings to the query embedding according to the similarity measure.

26. A system comprising:
a non-transitory storage medium having instructions of a three-dimensional modeling program stored thereon; and
one or more data processing apparatus configured to run the instructions of the three-dimensional modeling program to perform operations according to any of method claims 1-25.

27. A non-transitory computer-readable medium encoding instructions operable to cause data processing apparatus to perform operations according to any of method claims 1-25.
